(19) Europäisches Patentamt European Patent Office Office européen des brevets

(11) **EP 4 692 864 A1**

(12) **EUROPEAN PATENT APPLICATION**
published in accordance with Art. 153(4) EPC

(43) Date of publication:
**11.02.2026 Bulletin 2026/07**

(21) Application number: **24784876.5**

(22) Date of filing: **01.04.2024**

(51) International Patent Classification (IPC):
***G02B 3/00*** *(2006.01)*

(52) Cooperative Patent Classification (CPC):
**G02B 3/00**

(86) International application number:
**PCT/JP2024/013453**

(87) International publication number:
**WO 2024/210091 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.04.2023 JP 2023062078**

(71) Applicant: **Nippon Sheet Glass Company, Limited Tokyo 108-6321 (JP)**

(72) Inventor: **KATO Hiroaki Tokyo 108-6321 (JP)**

(74) Representative: **Algemeen Octrooi- en Merkenbureau B.V.**
**P.O. Box 645**
**5600 AP Eindhoven (NL)**

(54) **ROD LENS ARRAY, CONTACT IMAGE SENSOR, READING DEVICE, IMAGE INSPECTION DEVICE, AND METHOD FOR MANUFACTURING ROD LENS ARRAY**

(57) A rod lens array in which a plurality of gradient index rod lenses 12 are arranged in a main scanning direction such that optical axes thereof are substantially parallel satisfies 0.01 [mm] $\leq \Delta W \leq$ 0.1 [mm] when a substantially erect equal-magnification image of an object surface OS is formed on an image surface IS (Note that $\Delta W$ is an absolute value of a difference between a length $W_{ob}$ of the object in the main scanning direction and a length $W_{im}$ of the image in the main scanning direction).

FIG. 5A

FIG. 5B

**Description**

[TECHNICAL FIELD]

The present invention relates to a rod lens array mainly used for a contact image sensor or the like.

[BACKGROUND ART]

A rod lens is a cylindrical lens having an axisymmetric refractive index distribution in which a refractive index decreases from a center toward a peripheral portion. In a rod lens array, a plurality of rod lenses are arranged in one line or two or more lines such that central axes thereof are substantially parallel to each other, and are sandwiched between two plate-shaped substrates to be integrated, and can form an optical system for one-to-one image formation (see Patent Literature 1).

A contact image sensor (CIS) is known as an application using the rod lens array. The CIS can acquire information in a corresponding region as an image regarding an appearance of an object by scanning a surface of the object in one direction. Examples of the object to be used for acquisition of an image include all objects such as characters, pictures, patterns, structures, and articles in which information of a combination thereof is embodied, and it does not matter whether a form of the object is planar or three-dimensional (In a case of a three-dimensional object, appearance information from a certain one direction is acquired as an image). The specific object may be a paper, a photograph, or the like used as a document, but is not limited thereto. In addition, the object may be a product, a semi-product, a product in process, or the like (hereinafter, referred to as a work from an origin of "work in process") to be used for acquisition of information regarding an appearance for inspection or measurement.

The CIS includes a linear illumination device that linearly illuminates a surface of a document or the like, a rod lens array for forming an image of an object on the surface of the document or the like, a linear light receiving element array that receives a light ray for image formation, and some other components necessary for operating these, and has these integrated in a housing. Since the CIS has a purpose of acquiring an image and information in a corresponding region by scanning a surface of an object in one direction, the illumination device, the rod lens array, and the light receiving element array are generally long in one direction. A long direction of these parts is referred to as a "main scanning direction", and a scanning direction for the CIS to acquire an image and information is referred to as a "sub-scanning direction". The main scanning direction and the sub-scanning direction are generally orthogonal to each other.

The CIS has a small number of components constituting an optical function, is therefore easily adjusted for installation, and is suitable for miniaturization of an optical system. In addition, the rod lens array is characterized in that an equal-magnification erect image can be obtained and a distortion aberration around a visual field generated in a general lens is not generated. By using the rod lens array such that a relationship between an object and an image is an erect equal-magnification system, symmetry of an optical system between an object side and an image side is strong, which makes it easy to compensate for an aberration of a lens, and there is an advantage that a device which is compact in an axial direction can be obtained.

In addition, the rod lens array is also used, for example, for electrophotographic printing in order to form an image of a light ray emitted from a light emitting element array such as an LED array on a photosensitive drum in a printer. Since there is no movable portion such as a polygon mirror as compared with a conventional laser scanning type writing system, there are few failures, a quiet system can be obtained, and a printing device can be downsized.

[RELATED-ART LITERATURE]

[PATENT LITERATURE]

[Patent Literature 1] JP 2002-318302 A

[SUMMARY OF INVENTION]

[TECHNICAL PROBLEM]

As one example of utilization of the CIS, an image dimension measuring device or an image measuring device can be considered. The image dimension measuring device is a device capable of automatically feeding back coordinates of a reference point in a form programmed in advance to a control device by acquiring a two-dimensional image of a document or a work by an area camera or scanning with a line sensor, detecting an arbitrary coordinate position of the document or the work from a conversion coefficient between one preset pixel and a region on an entity, measuring a length, or using an image recognition function together.

In the image dimension measuring device, measurement accuracy within 0.1 mm may be required. For example, in a printing application in which coordinates of a mark (crop mark) of a reference position drawn on a paper surface are detected, a printing position of a next step is adjusted on the basis of the obtained mark position coordinates, and plates are superimposed a plurality of times, accuracy of $\pm 0.1$ mm is required in order to superimpose and print a plurality of colors without color bleeding. This is because, when a measuring device that does not reach this dimensional accuracy is used, print patterns of colors synthesized on the paper surface do not overlap, color bleeding occurs at an edge of a printed matter, or distortion occurs without obtaining an accurate contour shape.

In a CIS applied to a line sensor type image measuring device, since there is no strong demand regarding an image magnification in a conventional rod lens array, it has been difficult to apply the rod lens array to an inspection device including a mechanism that accurately recognizes a reference pattern image and feeds back reference position coordinates or a field of image measurement that evaluates a length with high accuracy.

For example, a pixel pitch of a high-accuracy line sensor used in a CIS is 4800dpi = 0.005 mm. Therefore, a change in the size of an image smaller than 0.005 mm can be ignored in use.

The present invention has been made in view of such a situation, and an object thereof is to improve an equal magnification of a rod lens array configured to form an erect equal-magnification image of an object point.

[SOLUTION TO PROBLEM]

In order to solve the above problems, one aspect of the present invention is a rod lens array in which a plurality of gradient index rod lenses are arranged in a main scanning direction such that optical axes thereof are substantially parallel, and the rod lens array satisfies $0.01$ [mm] $\leq \Delta W \leq 0.1$ [mm] when a substantially erect equal-magnification image of an object is formed on an image surface (in which $\Delta W$ is an absolute value of a difference between the length of the object in the main scanning direction and the length of the image in the main scanning direction).

$\Delta W$ may be represented by $\Delta W = TC \cdot \Delta X / Z$ (in which TC is a distance between an object point and the image, Z is a distance between a first surface on an object side of the rod lens array and a second surface on an image side, and $\Delta X$ is an absolute value of a difference between a distance between optical axes of rod lenses at both ends on the first surface and a distance between optical axes of rod lenses at both ends on the second surface).

$\Delta X$ may satisfy $0.005$ [mm] $\leq \Delta X \leq 0.030$ [mm].

An inter-lens distance St may satisfy St $\leq 0.01$ [mm] (in which St is a distance between adjacent rod lenses, and is obtained by St $= p_d - 2 \times r_0$ when a rod lens radius is $r_0$ and a distance between central axes is $p_d$).

The rod lens has a cylindrical shape having a refractive index distribution changing in a radial direction from a center, the refractive index distribution n(r) is approximately represented by $n(r)^2 = n_0^2 \cdot \{1-(g \cdot r)^2\}$, and an aperture angle $\theta_c$ of the rod lens is represented by $\theta_c = n_0 \cdot g \cdot r_e$, and may satisfy $3.5° \leq \theta_c \leq 15°$ (in which r is a distance from a central axis of the rod lens, $n_0$ is a refractive index on the central axis, n(r) is a refractive index at r, g is a refractive index distribution constant, and $r_e$ is an effective radius of the rod lens).

The refractive index distribution constant of the rod lens may satisfy $0.08 \leq g \leq 0.45$.

The rod lens has a core/cladding structure, and may satisfy $0.70 \leq r_e/r_0 \leq 0.95$ and $0.02 \leq$ Ct [mm] when a radius of the rod lens is $r_0$, a cladding thickness is Ct, and an effective radius of the rod lens is $r_e$.

Another aspect of the present invention is a contact image sensor including the above rod lens array.

Still another aspect of the present invention is a reading device including the above image sensor.

Still another aspect of the present invention is an image inspection device including the above rod lens array. The image inspection device may have a measurement accuracy of 0.1 mm or less.

Still another aspect of the present invention is a method for manufacturing the above rod lens array. This method includes: preparing a grooved surface plate in which a plurality of grooves are arranged; arranging cylindrical glass rods having a refractive index distribution in a radial direction in the grooves; superposing a first plate-shaped substrate having a resin surface on one main surface on the grooved surface plate such that the resin surface is in contact with side surfaces of the glass rods and pressurizing the first plate-shaped substrate; separating the first plate-shaped substrate having the glass rods fixed to the resin surface from the grooved surface plate; and superposing a second plate-shaped substrate having a resin surface on one main surface on the first plate-shaped substrate such that the resin surface is in contact with side surfaces of the glass rods and pressurizing the second plate-shaped substrate.

Note that any combinations of the above components and modifications and the like among the expression method, the device, and the like of the present invention are also effective as aspects of the present invention.

[ADVANTAGEOUS EFFECTS OF INVENTION]

According to the present invention, it is possible to improve an equal magnification of a rod lens array configured to form an erect equal-magnification image of an object point.

[BRIEF DESCRIPTION OF DRAWINGS]

[Fig. 1] Fig. 1 is a schematic perspective view of a rod lens array according to an embodiment of the present invention.

[Fig. 2] Fig. 2 is a schematic perspective view illustrating a relationship between an object surface and a projected image surface by a rod lens array.

[Fig. 3] Fig. 3 is a view for explaining a structure of a rod lens.

[Fig. 4] Figs. 4A and 4B are views illustrating a rod lens array in a case where there is no inclination between rod lenses.

[Fig. 5] Figs. 5A and 5B are views illustrating a rod lens array in a case where an inclination of a rod lens is gradually generated between the rod lenses.

[Fig. 6] Fig. 6 is a schematic view for explaining a double spinning apparatus used in a direct spinning method.

[Fig. 7] Fig. 7A is a perspective view of a glass rod, and Fig. 7B is a cross-sectional view thereof.

[Fig. 8] Fig. 8 is a diagram illustrating a relationship between a radius and a refractive index in a glass rod.

[Fig. 9] Fig. 9 is a conceptual diagram for explaining a state of ion exchange.

[Fig. 10] Fig. 10 is a diagram illustrating a relationship between a radius and a refractive index in a glass rod to which a refractive index distribution has been imparted.

[Fig. 11] Fig. 11 is a view illustrating an image sensor using a rod lens array.

[Fig. 12] Fig. 12 is a view illustrating an optical printer using a rod lens array.

[Fig. 13] Fig. 13 is a view illustrating an image inspection device using a rod lens array.

[Fig. 14] Fig. 14 is a view schematically illustrating an example of a grooved surface plate.

[Fig. 15] Fig. 15 is an overall schematic view of a plate-shaped work of a rod lens array.

[Fig. 16] Figs. 16A to 16E are schematic views for explaining assembly of a plate-shaped work of a rod lens array according to Example 1.

[Fig. 17] Fig. 17 is a schematic view illustrating a plurality of lens array works cut out from a plate-shaped work.

[Fig. 18] Fig. 18 is a schematic view of the rod lens array according to Example 1.

[Fig. 19] Fig. 19 is a view illustrating an image formation evaluation optical system of a rod lens array.

[Fig. 20] Fig. 20 is a plan view of a knife edge chart.

[Fig. 21] Figs. 21A to 21C are schematic views for explaining assembly of a plate-shaped work of a rod lens array according to Example 4.

[DESCRIPTION OF EMBODIMENTS]

Hereinafter, an embodiment of the present invention will be described. The same or equivalent components, members, and treatments illustrated in the drawings are denoted by the same reference numerals, and duplicative description will be omitted appropriately. The embodiment does not limit the invention and is described for illustrative purposes, and all the characteristics described in the embodiment and a combination thereof are not necessarily essential to the invention.

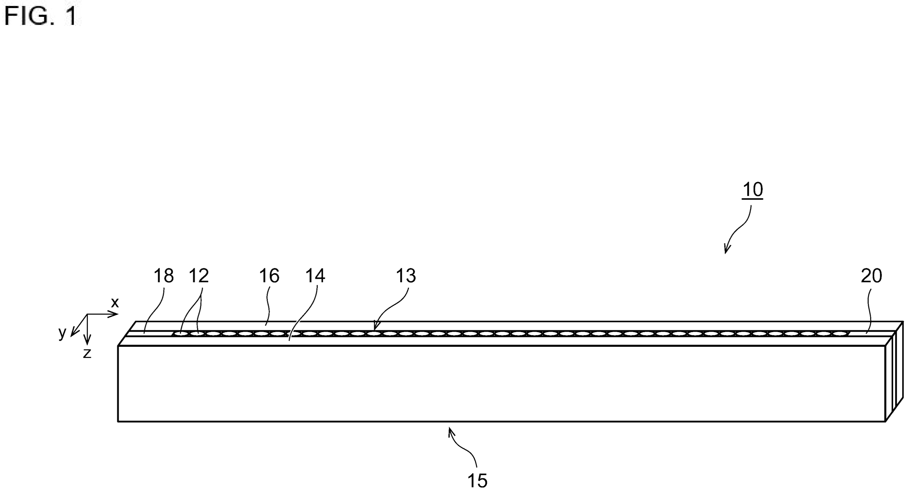

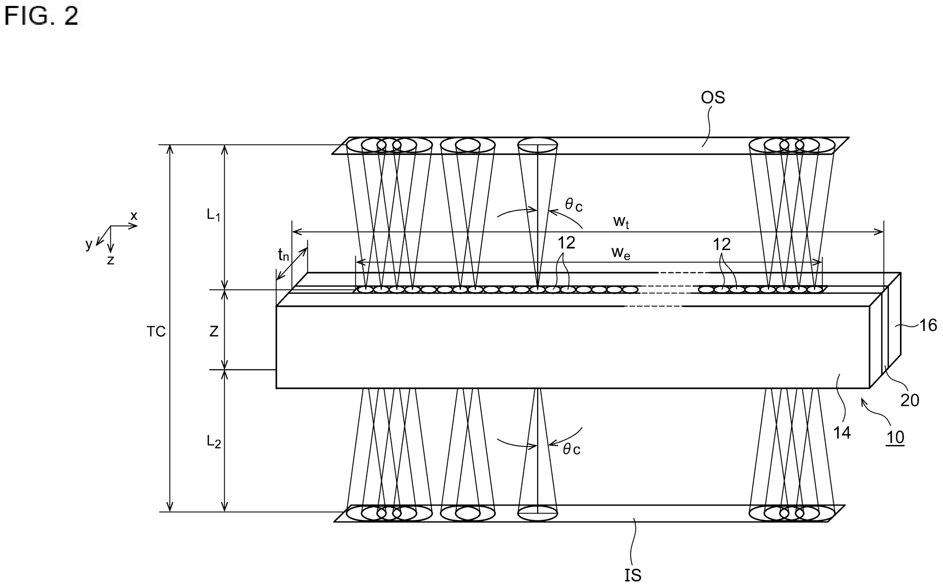

Fig. 1 is a schematic perspective view of a rod lens array 10 according to an embodiment of the present invention. Fig. 2 is a schematic perspective view illustrating a relationship between an object point (or object surface) OS and a projected image point (or image surface) IS by the rod lens array 10. The rod lens array 10 can be used for a CIS.

As illustrated in Fig. 1, in the rod lens array 10, a plurality of cylindrical lenses (rod lenses) 12 are arranged in one line such that central axes thereof are substantially parallel to each other. Each rod lens may have an axisymmetric refractive index distribution in which a refractive index decreases from a center toward an outer peripheral portion. In another embodiment, in the rod lens array 10, the rod lenses 12 may be arranged in two or more lines in a y direction. The central axis of each rod lens 12 corresponds to an optical axis of each rod lens. The rod lens 12 has two opposing surfaces as a light incident surface and a light emission surface, respectively. As illustrated in Fig. 1, the rod lens array 10 is sandwiched between two plate-shaped substrates 14 and 16, and is integrated therewith together with spacers (plates) 18 and 20 arranged at both ends. The rod lens 12 may be a glass rod lens or a plastic rod lens. In the present specification, unless otherwise specified, the rod lens 12 is cylindrical, and the rod lens array 10 is treated as an assembly of the cylindrical rod lenses 12. Such a rod lens 12 having a refractive index distribution may be referred to as a gradient index lens (GRIN lens, GRIN stands for GRaded INdex).

The rod lens 12 has two surfaces (bottom surfaces) substantially perpendicular to optical axis thereof and substantially parallel to each other. As illustrated in Fig. 1 or 2, the rod lens array 10 is configured such that optical axes of the rod lenses 12 are substantially parallel, and at the same time, bottom surfaces thereof are flush (flat). In the rod lens array 10, a pair of surfaces of the rod lens array 10 in which the bottom surfaces of the rod lenses 12 are assembled flat are referred to as a first surface 13 and a second surface 15, respectively. The first surface 13 and the second surface 15 can function as a light incident surface and a light emission surface. In Fig. 1, it should be noted that the second surface 15 is hidden by the plate-shaped substrate 14 of the rod lens array 10 depicted in the perspective view.

The rod lens array 10 has an effective optical region corresponding to a region of a surface of an object to be used for reading or image acquisition, or corresponding to the length of at least one of sides corresponding to these regions. The effective optical region is a region on which the rod lens 12 included in the rod lens array 10 can exert a lens action. Assuming that a surface of an object is scanned one or more times, the size and shape of the rod lens array 10 may be any long type (a rectangular parallelepiped type which is relatively long only in one direction among three orthogonal directions) corresponding to the length of at least one of sides of a reading target region of the surface of the object.

Although an effective optical region (visual field diameter) of the rod lens 12 alone is small, by arranging a large number of the rod lenses 12 so as to reach a sufficient length in one direction, a sufficiently large image can be obtained at a time in the arranged direction by synthesis of an optical action (formation of an image of an object) by the rod lenses 12. Then, by scanning (a CIS including) the rod lens array 10 in a direction perpendicular to the arrangement direction, it is possible to acquire an image and information of a surface of a certain area of the object.

As illustrated in Fig. 1, in the actual rod lens array 10, the rod lenses 12 arranged so as to be long in one direction are sandwiched between the pair of plate-shaped substrates 14 and 16, and then a gap is filled with a resin in order to achieve integration between the rod lenses 12 and integration with the plate-shaped substrates 14 and 16. The plate-shaped substrates 14 and 16 are rectangular parallelepipeds long in one direction, and are long parallel flat plates. From a manufacturing advantage, a pair of side surfaces of the plate-shaped substrates 14 and 16 are substantially flush with the first surface 13 and the second surface 15 of the rod lens array, in other words, constitute a part of the first surface 13 and the second surface 15 of the rod lens array.

In the long rod lens array 10, generally, the longest direction (direction in which the most rod lenses 12 are arranged: arrangement direction) is defined as a "main scanning direction" or an "x direction" among three orthogonal directions. The x direction is parallel to the first surface 13 and the second surface 15 of the rod lens array. A direction perpendicular to the x direction and substantially parallel to the first surface 13 and the second surface 15 of the rod lens array is defined as a "y direction". When a surface of a document or the like is scanned with a CIS, scanning is performed in the y direction perpendicular to the main scanning direction (x direction), and thus the y direction may be referred to as a "sub-scanning direction". A direction perpendicular to the x direction and the y direction is defined as a "z direction".

The refractive index distribution of the rod lens 12 is a refractive index distribution in which a refractive index n(r) at a distance r from the central axis in a direction perpendicular to the central axis is approximately represented by the following formula (1) in a range of at least 0.3R to 0.6R (R is a radius of the rod lens 12).

$$n(r)^2 = n_0^2 \cdot \{1 - (g \cdot r)^2\} \quad (1)$$

Here, g is a refractive index distribution constant, and $n_0$ is a refractive index at a center (r = 0). The refractive index distribution constant may satisfy $0.08 \leq g \leq 0.45$. The formula (1) is obtained by approximation in the vicinity of r = 0 including r = 0 while ignoring a term equal to or more than a fourth power term of r in a formula of a refractive index distribution essentially represented by the following formula (2).

$$n(r)^2 = n_o^2 \cdot \{1 - (g \cdot_r)^2 + h_4 \cdot (g \cdot r)^4 + h_6 \cdot (g \cdot r)^6 + h_8 \cdot (g \cdot r)^e + \cdots\} \quad (2)$$

Here, $h_4$, $h_6$, $h_8 \cdots$ represent high-order constants. In addition, the formula representing the refractive index distribution may be further approximated and represented by the following formula (3).

$$n(r) = n_0 \cdot \{1 - (g^2/2) \cdot r^2\} \quad (3)$$

In addition, there are many known documents in which the refractive index distribution constant includes a constant A. This is derived from the formula (4) of the refractive index distribution obtained by defining the refractive index distribution constant as $\sqrt{A}$ on a condition that a light ray on a meridional surface is condensed at one point without aberration in the gradient index rod lens.

$$n(r)^2 = n_0^2 \cdot \text{sech}^2(\sqrt{A} \cdot r) \quad (4)$$

In the formula (4), similarly, an approximate formula in the vicinity of r = 0 including r = 0 can be obtained as in the formula (5) below, and as a result, $g = \sqrt{A}$ may be used.

$$n(r)^2 = n_0^2 \cdot \{1 - (\sqrt{A} \cdot r)^2\} \quad (5)$$

The radius $r_0$ of the rod lens 12 is 0.05 mm to 1 mm, and preferably 0.1 mm to 0.9 mm from a demand for miniaturization of the rod lens array 10. When the radius $r_0$ of the rod lens 12 is less than 0.1 mm, the lens is threadlike and mechanical strength thereof is significantly reduced, which is problematic in terms of difficulty of processing thereof. On the other hand, when the radius $r_0$ of the rod lens 12 exceeds 1 mm, mechanical strength of the lens increases and the lens is easily processed, but an influence of difficulty in forming a refractive index distribution inside the lens, an increase in aberration, a deterioration in resolution, or the like easily occurs.

Furthermore, the refractive index $n_0$ in the central axis of the rod lens 12 is 1.4 to 1.65, and preferably 1.45 to 1.63. When the refractive index $n_0$ in the central axis of the rod lens 12 is less than 1.4, it is difficult to select a material constituting the transparent rod lens 12, and power for refracting light tends to be small. When the refractive index $n_0$ exceeds 1.65, so-called power of the lens can be increased, but colorability for light having a specific wavelength is large, and a problem may occur from a viewpoint of transmittance of a light ray within a range of a required wavelength band. Note that, unless otherwise specified, the refractive index of the rod lens 12 refers to a refractive index when a wavelength is 570 nm.

When the aperture angle $\theta_c$ of the rod lens 12 is $\theta_c = n_0 \cdot g \cdot r_0$, $\theta_c = 3.5°$ to $15°$. $r_e$ is an effective radius of the rod lens 12, and $r_e = 0.6 r_0$ to $0.99 r_0$ is satisfied with respect to the radius $r_0$ of the rod lens 12. The effective radius of the rod lens 12 is a radius corresponding to a portion that exerts a lens action on light incident on the rod lens 12. When $\theta_c$ is less than $3.5°$, so-called "brightness" of the rod lens is small, and a formed image is dark. When $\theta_c$ exceeds $15°$, brightness of an image can be ensured, but it is difficult to control an aberration of the lens, the depth of focus is significantly small, and it is difficult to adjust a distance between the rod lens array 10 and a subject or a distance between the rod lens array 10 and a light receiving element, which causes a problem in practical use. The aperture angle $\theta_c$ of the rod lens 12 may be preferably $4°$ to $12.5°$. In addition, as illustrated in Fig. 2, the aperture angle $\theta_c$ of the rod lens 12 is a half vertex angle of a cone extending in the field of view (or an angle formed by a generatrix of the cone and a central axis of the cone) from a center of an incident surface or an emission surface of the rod lens 12 (precisely, a center of an incident pupil or an emission pupil) . More precisely, the aperture angle $\theta_c$ of the rod lens 12 can be represented by $\theta_c = \sin^{-1}(n_0 \cdot g \cdot r_0)$, but a calculation formula of $\theta_c = n_0 \cdot g \cdot r_0$ is used as an approximate formula when $\theta_c$ is small. Note that, unless otherwise specified, the g value of the rod lens 12 is a g value when a wavelength is 570 nm, and the aperture angle $\theta_c$ calculated by the above formula is also a value when the wavelength is 570 nm similarly.

In such a rod lens 12 having a refractive index distribution, as it approaches an outer periphery, a mismatch between a refractive index distribution calculated by the formula (1) or the like and an actual refractive index may occur. It is not industrially easy to perform control to overcome a portion where such a mismatch in refractive index is likely to occur. Therefore, an index indicating how much the refractive index conforms to the refractive index distribution represented by the formula (1) or the like in a radial direction from a central portion of the rod lens 12 is a concept of "effective radius". The effective radius refers to, as the name indicates, a diameter of a portion that is a region of a controlled refractive index distribution, for example, a region where focusing of light and the like can be controlled by the rod lens 12, which is a mode of a concentric cylinder included in a cylinder of the entire rod lens. In other words, light that enters or passes through a region other than a region defined by the effective radius does not contribute to focusing of light or the like, and in some cases, becomes stray light through reflection, refraction, or scattering, and thus may be unpreferable. When the effective radius of the rod lens is defined as $r_e$ [mm], a controlled refractive index distribution represented by the formula (1) or the like may be formed in a range of $0 \leq r \leq r_e$. When an outer radius of the rod lens 12 (a radius of a cylindrical body corresponding to the entire rod lens) is $r_0$ [mm], $0.70 \leq r_e/r_0 \leq 0.99$ is preferably satisfied. When $r_e/r_0$ is less than 0.7, a region outside an effective region of the lens is large, which increases the amount of light (light flux) that does not contribute to controlled focusing of light passing through the outside of the effective radius, and may adversely affect image forming performance. On the other hand, in order to achieve $r_e/r_0$ exceeding 0.99, difficulty of a refractive index distribution forming step is significantly increased, and there is a possibility that the lens is not suitable as an industrial product. $r_e/r_0$ more preferably satisfies $0.75 \leq r_e/r_0 \leq 0.95$.

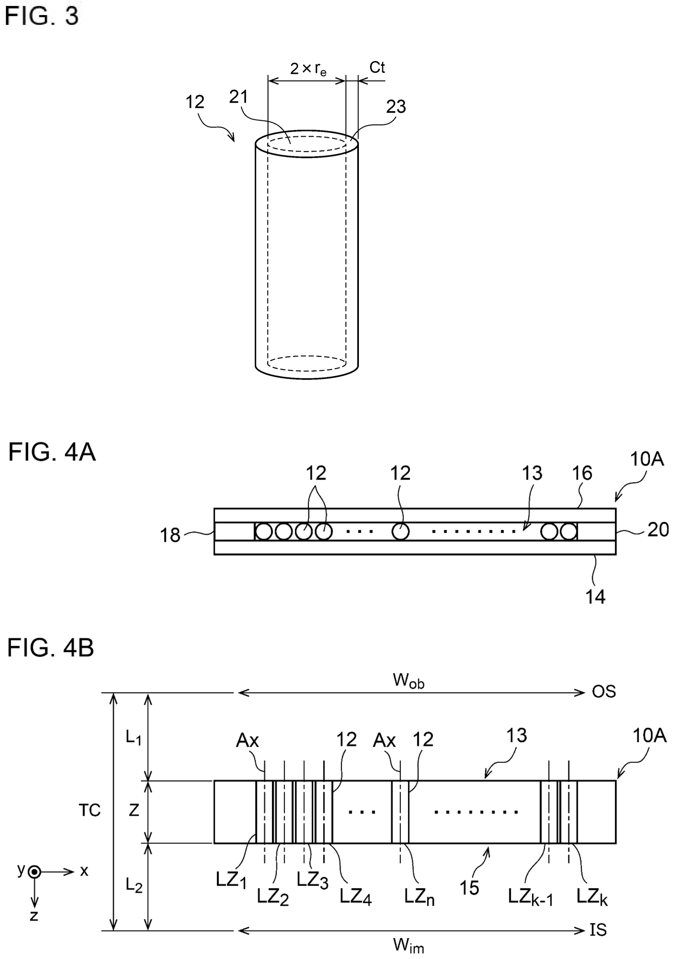

Fig. 3 is a view for explaining a structure of the rod lens 12. As illustrated in Fig. 3, the rod lens 12 may have a so-called core/cladding structure including a core portion 21 and a cladding portion 23. The cladding portion is in a covering form and has a constant thickness in a radial direction, and thus is also referred to as a "cladding layer". As described above, it is generally not easy to control a refractive index distribution in a region close to an outer peripheral surface of the rod lens 12. Under such a situation, a layer having a function of absorbing a part of light, such as a colored layer, may be formed as the cladding portion 23 in a region close to the outer peripheral surface of the rod lens 12. In a region corresponding to the outside of the effective radius, for example, a layer containing a light absorbing active component may be formed. When it is difficult to precisely control a refractive index distribution in an outer peripheral portion of the rod lens 12 and the vicinity thereof, light that has passed through such a region may have an inappropriate influence on focusing and condensing performance of the light due to an aberration, stray light, or the like. Therefore, it is for the purpose of absorbing light passing through or reaching the region.

When the rod lens 12 has a core/cladding structure, the core portion 21 has a substantially axisymmetric cylindrical body including an optical axis of the rod lens 12, and the effective radius $r_e$ described above can be applied to a radius of the core portion 21. The thickness Ct of the cladding portion is a difference between the outer radius $r_0$ of the rod

lens 12 and the effective radius $r_e$, and is represented by $Ct = r_0 - r_e$. The thickness Ct [mm] of the cladding portion preferably satisfies $0.02 \leq Ct$.

When the rod lens 12 is made of glass, in the rod lens 12 having a core/cladding structure, the cladding portion 23 may include an absorption portion that absorbs a part of light having a wavelength in a range of at least 380 nm to 780 nm. The cladding portion 23 may contain any one element of Fe, Co, Ni, Mn, Cr, Cu, Ag, Au, Ti, Ru, V, Mo, and Bi. These elements may be contained as oxides. By containing these elements, it can be expected to increase light absorption performance.

In the rod lens 12 having a core/cladding structure, a refractive index of the cladding portion 23 may be smaller than a refractive index of the core portion 21 and may be 1.50 to 1.65, and the refractive index of the core portion 21 may be 1.52 to 1.66 (both represent values when a measurement wavelength is 570 nm) from a viewpoint of suppressing so-called stray light (including a light ray that does not contribute to formation of an image and a light ray that may cause flare light as described above) and expecting a light confinement effect.

The rod lens 12 may have irregularities on an outer peripheral surface of the rod lens 12 as necessary for the purpose of scattering a light ray that may be stray light. When the rod lens 12 made of glass is used, one specific method for forming irregularities on the outer peripheral surface of the rod lens is a method for immersing an ion-exchanged glass rod in a mixed solution of hydrofluoric acid, ammonium fluoride, and water (referred to as a flare cut liquid) for several minutes to form fine irregularities on a side surface of the rod lens 12 by a chemical action thereof.

The outer peripheral surface of the rod lens 12 may be coated with a black resin composition as necessary for the purpose of absorbing a light ray that may be stray light. Coating with the black composition may be expected to have a similar effect by, for example, black coating of a peripheral edge portion or an edge surface in a normal lens. As a material to be used for coating, a resin such as an epoxy resin, an acrylic resin, a polyurethane resin, a phenol resin, a melamine resin, an unsaturated polyester resin, an alkyd resin, or a silicone resin is desirable, and one of these resins or a mixture of two or more thereof may be used. Furthermore, the material may be colored so as to absorb at least a part of stray light, or may be black. Furthermore, a lustreless appearance after curing is desirable. As the material to be used for coating, the above resin may further contain black particles such as carbon black, titanium black (titanium-based black pigment), magnetite type triiron tetraoxide, an oxide containing copper and chromium, and VALIFAST black (azochrome compound). In addition, the rod lens 12 may be immersed in a chloroform solution containing VALIFAST black (manufactured by ORIENT CHEMICAL INDUSTRIES CO., LTD.) to be coated, and chloroform may be evaporated and dried to manufacture a glass rod dyed in black.

A material of the rod lens 12 is a transparent material, and any material can be used as long as the material exhibits the effect of the present embodiment. The material of the rod lens 12 may be, for example, glass. A glass material has high transparency (high light transmittance), and is preferable as an optical element. When the material of the rod lens 12 is glass, a refractive index distribution is formed inside the rod lens 12 by a known ion exchange method or the like. This is a method in which a cylindrical rod-shaped base material glass is manufactured by adding an alkali metal element such as Li (lithium) thereto, and the base material glass is immersed in a molten salt containing another alkali metal element such as K (potassium) for a certain period of time, whereby Li in the glass is discharged into the molten salt to form a concentration gradient of an alkali metal element such as Li inside the glass and to form distributions of a dielectric constant and a refractive index. As a rod lens made of glass, a SELFOC (registered trademark) lens manufactured by Nippon Sheet Glass Co., Ltd. is well-known.

The material of the rod lens 12 may be, for example, a resin. Among the resins, a resin containing acrylic having high transparency is suitably used. The rod lens containing a resin is manufactured by, for example, a diffusion method. This is a method in which a cylindrical rod-shaped base material resin is molded by stacking a plurality of concentric cylinders (a portion including a center is a cylinder) made of resins having different refractive indexes, and heated to be stretched into a thinner cylindrical rod, and mutual diffusion of components is caused between resin layers to form a concentration gradient of a specific component or dye and to form distributions of a dielectric constant and a refractive index.

As described above, the rod lens array 10 is manufactured by arranging and integrating the plurality of rod lenses 12 such that central axes thereof are parallel to each other and the plurality of rod lenses 12 have a pair of flat surfaces substantially perpendicular to the central axes by an assembly of the rod lenses 12. The rod lens array 10 according to the present embodiment is used in an erect equal-magnification system. The erect equal-magnification system means a system in which an object point on a surface such as a subject, an object, a work, or a document is converted into an erect equal-magnification image by a rod lens array.

Modulation transfer function (MTF) is used as an index indicating optical performance of the rod lens array 10. The MTF is obtained by a formula: $MTF = (I_{max} - I_{min}) / (I_{max} + I_{min})$ after a one-dimensional or two-dimensional pattern such as a Ronchi-chart having a predetermined spatial frequency is used, light from a light source is made incident on the rod lens array 10 through the pattern, an image of the formed pattern is read by a line sensor such as an array-shaped photo diode (PD) arranged at an image forming position or a two-dimensional sensor such as a CCD, and a maximum value $I_{max}$ and a minimum value $I_{min}$ of a light intensity distribution thereof are measured.

The MTF in the erect equal-magnification system of the rod lens array 10 according to the present embodiment is 30% or more within a range of an effective length We of the rod lens array 10 when a pattern having a spatial frequency of 6 line pairs/mm (also referred to as lp/mm or/mm) is used. When the MTF of the erect equal-magnification system of the rod lens array 10 is less than 30%, problems such as blurring of an image, difficulty in discrimination of an image, blurriness of an image, and low resolution of an image may occur when the rod lens array 10 is used for an image sensor. The MTF is preferably 40% or more.

In addition, as illustrated in Fig. 2, in a case where an interval $L_1$ between a pattern (object surface OS) corresponding to a surface of an object and an incident surface of the rod lens array 10 and an interval $L_2$ between an emission surface of the rod lens array 10 and a light receiving surface (image surface IS) of a light receiving element are defined, when the pattern and the light receiving element are moved symmetrically while $L_1 = L_2$ is satisfied all the time such that a value of MTF is the highest (best) value, the interval $L_1$ between the incident surface of the rod lens array 10 and the pattern (object surface OS) is defined as a working distance (WD), and a value of MTF of the rod lens 12 of the erect equal-magnification system at this time is adopted.

Furthermore, $L_2 = WD$ at which the best MTF is obtained preferably satisfies WD = 3.5 mm to 40 mm. Since WD is large, it is possible to manufacture a desired image sensor equipped with the rod lens 12 having a long working distance. In a case where WD is smaller than 3.5 mm, a distance from an object is too small when used as a CIS for another application, and a problem occurs in device design. In addition, when WD is longer than 40 mm, it is necessary to further improve an arrangement property of the rod lenses 12, and a level of a method required therefor is more difficult. WD preferably satisfies WD = 4.0 mm to 35 mm. At this time, a balance between difficulty and cost of manufacturing the rod lens array 10 and achievement of a purpose of the long WD is favorable from an industrial viewpoint.

Furthermore, a total conjugate length (TC) when the rod lens 12 is used in an erect equal-magnification system is represented by TC = 2 × WD + Z (Z is a distance between an incident surface and an emission surface of the rod lens array), and TC = 10 mm to 120 mm is preferably satisfied. It should be noted that the total conjugate length TC is generally obtained by TC = $L_1$ + Z + $L_2$, but the above formula is an expression formula obtained by considering that the object surface (OS), the rod lens array 10, and the image surface (IS) are included in an erect equal-magnification system, and $L_1 = L_2 =$ WD is satisfied. Z is the length of the rod lens array 10 in a central axis direction of the rod lens 12. Hereinafter, Z is simply referred to as the length of the rod lens array 10. TC changes almost in conjunction with WD, and when TC exceeds 120 mm, an image sensor itself is large, which contradicts miniaturization of an device. TC more preferably satisfies TC = 15 mm to 110 mm, and still more preferably satisfies TC = 18 mm to 105 mm.

Regarding tolerance of a distance between an object and the rod lens array, there is a depth of field (DOF) as a characteristic value representing an allowable range of the distance between the object and the lens in which image forming performance in an image of the object is practically allowable. Here, the practically allowable range refers to a range in which MTF in a test target having a spatial frequency of 6 lp/mm has performance of 30% or more. A small DOF causes a problem that a focused portion and a non-focused portion are generated when the thickness of a subject varies. For this reason, an image of a non-focused portion is not clear, and there is a possibility that a defect is overlooked and a defect is erroneously recognized.

The DOF of the rod lens array is described with reference to Fig. 2. The rod lens array 10, a pattern, and a light receiving element are arranged in a positional relationship of $L_1$ and $L_2$ in which the best MTF is obtained, then the distance $L_1$ from the pattern is moved, and a value of MTF is calculated at each position. Then, a relationship between the distance $L_1$ from the pattern and corresponding MTF is plotted, and the DOF is determined as a range of $L_1$ indicating a predetermined MTF value or more.

Fig. 2 illustrates a relationship among the rod lens 12, the rod lens array 10, and the parameters described so far. In Fig. 2, a direction parallel to a central axis of the rod lens 12 is a z direction, a direction which is perpendicular to the z direction and in which the rod lenses 12 are arranged is an x direction, and a direction perpendicular to the z direction and the x direction is a y direction. In the rod lens array 10 illustrated in Figs. 1 and 2, one rod lens 12 is arranged in the y direction. Such arrangement may be referred to as "single-line arrangement" or "one-line arrangement" for convenience. The rod lens array 10 is not limited to the single-line arrangement, and may be two-line arrangement (two rod lenses are arranged in the y direction) or three or more-line arrangement (three or more rod lenses are arranged in the y direction). The lengths and angles represented by symbols are in accordance with the above description. In addition, Wt represents the length (total length) of the rod lens array 10 in the x direction, $t_h$ represents the length (thickness) of the rod lens array 10 in the y direction, and $W_e$ represents the length of the rod lens array 10 in a range in which the rod lenses 12 are arranged in the x direction. In a case of the erect equal-magnification system rod lens array 10, $L_1 = L_2$ is satisfied. At this time, an erect equal-magnification image on the object surface OS by the rod lens array 10 is formed on the image surface IS.

When the rod lens array 10 is manufactured as an industrial product, there may be a problem in arrangement accuracy of the rod lenses 12. In the rod lens array 10 illustrated in Fig. 1, in the y direction, the rod lenses 12 are restrained from both sides by the flat surfaces of the plate-shaped substrates 14 and 16, and therefore there is no major problem. In addition, also in the z direction, processing such as polishing is performed after the lenses are arranged and rigidly integrated with a plate-shaped substrate or the like, and therefore there is no major problem in flatness (surface uniformity:

a property representing a state in which there is almost no step in a plane). However, in the x direction (arrangement direction), an element of rotation of the rod lens 12 about the y direction is added, and a situation in which the rod lens 12 is inclined in an x-z plane or a plane parallel to the x-z plane may occur. This is because, in the rod lens array 10, there is a case where a gap is set between the arranged rod lenses 12 from a relationship between the degree of overlapping determined from a visual field diameter of the rod lens 12 and the diameter of the rod lens 12 (the radius of the cylinder × 2) and optical performance such as required illuminance unevenness, and at this time, an action of mutually restraining the cylindrical rod lenses 12 viewed from the first surface 13 or the second surface 15 as in closest packing cannot be expected.

Such an inclination of the rod lens 12 in the x direction (arrangement direction or main scanning direction) is considered. In particular, even if an inclination between the adjacent rod lenses 12 is minute, in a case where minute inclinations are accumulated in the x direction in which a large number of rod lenses are arranged in a long manner and inclinations of the rod lenses 12 at both ends in the x direction of the rod lens array 10 are large, the inclinations of the rod lenses 12 in the x direction are more important.

In a case where the rod lens array 10 is used in a CIS or the like, arrangement is adjusted together with adjustment of a focal length or the like of the rod lens array 10 so as to form an erect equal-magnification image of a surface (object surface or subject surface) of a document or the like. The erect equal-magnification system is requested because there is an optical advantage due to compactness of an device and symmetry thereof as described above.

Furthermore, in a case where a CIS equipped with the rod lens array 10 is used as a reader of an image (dimension) measuring device or a camera module, there is also an advantage that it is convenient because information on a surface of an object or an image can be acquired at an equal magnification. However, accumulation of the inclinations of the rod lenses 12 in the x direction described above may cause a phenomenon in which an image magnification deviates from an equal magnification as an inclination of an optical axis of the rod lens 12 gradually increases. Furthermore, since the inclination of the lens gradually increases in the x direction from a normal direction (ideally, the optical axis is desirably parallel to the z direction), a situation in which an image magnification cannot be uniformly corrected by applying a constant correction parameter is also caused.

Such an unequal phenomenon (or gradual unequal phenomenon) between an object and an image is caused also by a positional deviation of any object point on the object surface OS from a point on the image surface IS to be originally projected by an action of the rod lens 12 whose optical axis is inclined (rotated around the y direction).

Such a positional deviation and unequal phenomenon caused by the inclination between the rod lenses 12 increase as a distance between the object surface OS and the rod lens array 10 increases. Since the rod lens array 10 is arranged so as to form an erect equal-magnification image of the object surface OS, the distance between the object surface OS and the rod lens array 10 is substantially equal to a distance between the rod lens array 10 and the image surface IS. Therefore, in the positional deviation and unequal phenomenon caused by the inclination between the rod lenses, the rod lens array 10 having a longer object surface-image surface distance (object-image distance, in other words, a total conjugate length (TC), which is simply referred to as TC in the present specification) tends to have a larger change in magnification and to lower equal magnification.

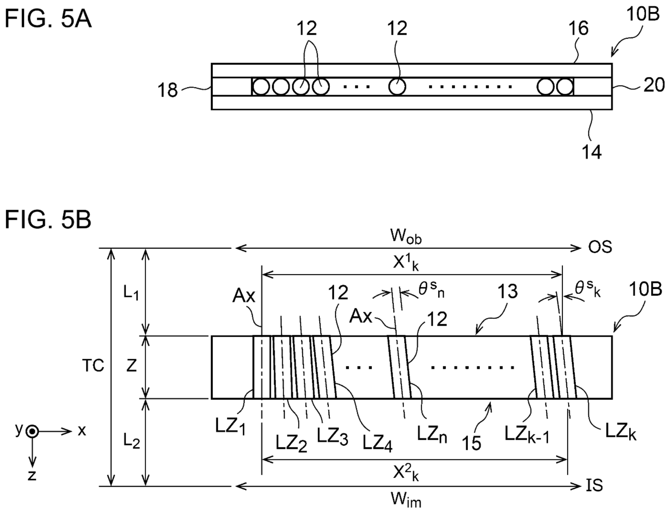

With reference to Figs. 4A, 4B, 5A, and 5B, a principle of causing the unequal phenomenon of the rod lens array will be briefly described.

Figs. 4A and 4B are views illustrating a rod lens array 10A in a case where there is no inclination between rod lenses. Fig. 4A is a schematic plan view of the rod lens array 10A, and Fig. 4B is a schematic front view of the rod lens array 10A. An optical axis (central axis) Ax of each rod lens 12 is strictly parallel to the z direction. Note that, in Fig. 4B, the rod lens 12 is depicted in a see-through manner for the sake of explanation.

Figs. 5A and 5B illustrate a rod lens array 10B in a case where an inclination of the rod lens 12 is gradually generated between the rod lenses. Fig. 5A is a schematic plan view of the rod lens array 10B, and Fig. 5B is a schematic front view of the rod lens array 10B. Note that, in Fig. 5B, the rod lens 12 is depicted in a see-through manner for the sake of explanation.

In Figs. 4B and 5B, the x direction (main scanning direction or arrangement direction) is parallel to a paper surface, the y direction (sub-scanning direction) is perpendicular to the paper surface, and the z direction is perpendicular to the x and y directions and parallel to the paper surface. The object surface OS and the image surface IS have a conjugate relationship of an erect equal magnification, and are separated from each other by TC which is a distance between the object surface and the image surface (Fig. 4B illustrating a normal positional relationship is an erect equal-magnification system, but it should be noted that strictly speaking, Fig. 5B in which an angular gradual deviation from the normal positional relationship occurs is deviated from the erect equal-magnification system).

The surface (first surface) 13 of the rod lens array 10A, 10B on an object side is a surface (incident surface) on which light from the object surface OS is incident, and the surface (second surface) 15 on an image surface side is a surface (emission surface) from which light is emitted. A distance between the incident surface 13 and the emission surface 15 is a length of the rod lens 12 in the z direction and is represented by Z, and is substantially constant over the x direction of the rod lens 12.

When a distance between the object surface OS and the incident surface 13 of the rod lens array 10A, 10B is represented by $L_1$, and a distance between the emission surfaces 15 of the rod lens array 10A, 10B and the image surface IS is represented by $L_2$, there is a relationship of $TC = L_1 + L_2 + Z$. The object surface OS, the image surface IS, the incident surface 13, and the emission surface 15 are parallel to each other and perpendicular to the z direction.

In the rod lens array 10A, 10B, a rod lens 12 at a left end on a paper surface is referred to as a first rod lens (n = 1), rod lenses 12 are referred to as a second rod lens (n = 2), a third rod lens (n = 3), a fourth rod lens (n = 4), •••, and an nth rod lens ••• as it goes in the x direction, and a rod lens 12 at a right end on the paper surface is referred to as a kth rod lens (n = k), which are represented by $LZ_1$, $LZ_2$, $LZ_3$, $LZ_4$•••, $LZ_n$•••, and $LZ_k$, respectively.

In the rod lens array 10A illustrated in Fig. 4B, the rod lenses 12 are in a normal arrangement in which no inclination occurs with each other (arrangement in which an image of an erect equal magnification of an object point is formed), and an image point of an object point on the object surface OS is generated at a position where the object point should be. Therefore, an unequal phenomenon (reduction in equal magnification) in positional deviation and image magnification does not occur.

Fig. 5B schematically illustrates a front view of an optical system that forms an image from the object surface OS to the image surface IS by the rod lens array 10B including a rod lens 12 having an inclination. Fig. 5B illustrates a pattern in which the rod lens $LZ_1$ has no inclination and an inclination between adjacent rod lenses is accumulated as it goes in the x direction. An optical axis (central axis) of the rod lens $LZ_1$ is parallel to the z direction. It is assumed that the rod lenses $LZ_1$, $LZ_2$, $LZ_3$, $LZ_4$•••, $LZ_n$•••, and $LZ_k$ are all restrained by the plate-shaped substrates 14 and 16 in the y direction, and the first surface 13 and the second surface 15 are flush with each other and have no step.

In Fig. 5B, an inclination of the rod lens $LZ_1$ with respect to the z direction is $\theta_1$ (=0°), an inclination between the rod lens $LZ_1$ and the rod lens $LZ_2$ is $\theta_2$, an inclination between the rod lens $LZ_2$ and the rod lens $LZ_3$ is $\theta_3$, an inclination between the rod lens $LZ_3$ and the rod lens $LZ_4$ is $\theta_4$, an inclination between the rod lens $LZ_{n-1}$ and the rod lens $LZ_n$ is $\theta_n$, and an inclination between the rod lens $LZ_{k-1}$ and the rod lens $LZ_k$ is $\theta_k$. An inclination $\theta^s_k$ between the rod lens $LZ_1$ and the rod lens $LZ_k$ is represented by the formula (6).

[Mathematical formula 1]

$$\theta^s_k = \sum_{n=1}^{k} \theta_n \qquad (6)$$

At this time, strictly speaking, in the rod lens array 10B, the rod lens $LZ_1$ is a right cylinder, and the other rod lenses are oblique cylinders. In a case of an oblique cylinder, a line at an equal distance from all points on a side surface of the cylinder is defined as an optical axis (central axis) Ax. At this time, the optical axis Ax of the oblique cylinder is not exactly perpendicular to the first surface 13 or the second surface 15. It should be noted that, surfaces of the rod lens having an oblique cylindrical shape on the first surface 13 and the second surface 15 of the rod lens array 10B are ellipses, and a line connecting centers of the pair of ellipses coincides with the optical axis (central axis) Ax. The above-described inclination $\theta_n$ between the rod lenses is synonymous with an inclination between the optical axes of the rod lenses. In other words, except for the rod lens $LZ_1$, the central axis of the rod lens $LZ_n$ is not strictly perpendicular to the first surface 13 and the second surface 15.

In Fig. 5B, regarding a distance between optical axes of the rod lens $LZ_1$ and the lens $LZ_k$, when an absolute value of a difference between a distance $X^1_k$ between the optical axes on the first surface 13 and a distance $X^2_k$ between the optical axes on the second surface 15 is $\Delta X_k$, $\Delta X_k$ is represented by the following formula (7) (in which Z represents a distance between the first surface 13 and the second surface 15 of the rod lens array 10B in the z direction).

$$\Delta X_k = Z \cdot \tan(\theta^s_k) \qquad (7)$$

In Fig. 5B, an effective length of the rod lens $LZ_n$ ($n \neq 1$) having an oblique cylindrical shape is a distance between an intersection of a surface included in the first surface 13 of the rod lens array 10B and the central axis Ax and an intersection of a surface included in the second surface 15 of the rod lens array 10B and the central axis Ax, and it should be noted that, strictly speaking, the effective length is different from the distance Z between the first surface 13 and the second surface 15 of the rod lens array 10B.

Furthermore, when the length of an object (object surface) in the x direction (main scanning direction) is $W_{ob}$, the length of an image is $W_{im}$, and an absolute value $\Delta W_k$ of a difference between $W_{ob}$ and $W_{im}$ is defined as an "unequal parameter" by $\Delta W_k = |W_{ob} - W_{im}|$, a relationship of the following formula (8) is established from Fig. 5B and the formula (7).

$$\Delta W_k = TC \cdot \Delta X_k / Z \qquad (8)$$

That is, in the rod lens array 10B in which the rod lens 12 gradually has a cumulative inclination in the x direction, the difference in length (size) between the object and the image to be formed can be obtained from the formula (8).

In the rod lens group ($LZ_j$, $LZ_{j+1}$, $LZ_{j+2}$, •••$LZ_{m-1}$, $LZ_m$) included in the rod lens $LZ_j$ and the rod lens $LZ_m$ (j < m) separated from each other, an inclination of the rod lens $LZ_j$ with respect to the z direction is $\theta_j$, an inclination between the rod lens $LZ_j$ and the rod lens $LZ_{j+1}$ is $\theta_{j+1}$, an inclination between the rod lens $LZ_{j+1}$ and the rod lens $LZ_{j+2}$ is $\theta_{j+1}$, ..., and an inclination between the rod lens $LZ_{m-1}$ and the rod lens $LZ_m$ is $\theta_m$. The (cumulative) inclination $\theta^s_{jm}$ between the rod lens $LZ_j$ and the rod lens $LZ_m$ is represented by the following formula (9).
[Mathematical formula 2]

$$\theta^s_{jm} = \sum_{n=j}^{m} \theta_n \qquad (9)$$

Regarding a distance between the optical axes of the rod lens $LZ_j$ and the rod lens $LZ_m$, when an absolute value of a difference between a distance between the optical axes on the first surface 13 and a distance between the optical axes on the second surface 15 is $\Delta X_{jm}$, $\Delta X_{jm}$ is represented by the following formula (10) (in which Z represents a distance between the first surface and the second surface of the rod lens array 10B in the z direction).

$$\Delta X_{jm} = Z \cdot \tan(\theta^s_{jm}) \qquad (10)$$

Furthermore, when the length of an object (object surface) in the x direction (main scanning direction) is $W^{ob}_{jm}$, the length of an image is $W^{im}_{jm}$, and an absolute value $\Delta W_{jm}$ of a difference between $W^{ob}_{jm}$ and $w^{im}_{jm}$ is defined by $\Delta W_{jm} = |W^{ob}_{jm} - W^{im}_{jml}|$, a relationship of the following formula (11) is established from Fig. 5B and the formula (10). The formula (11) is a generalization of the formula (8).

$$\Delta W_{jm} = TC \cdot \Delta X_{jm} / Z \qquad (11)$$

In an image measuring device equipped with a CIS using a rod lens array, even in a case where there is a premise that compensation or a correction action is applied in addition to tuning inside the measuring device, a difference between an object surface side length and an image surface side length is directly connected to measurement accuracy of the image measuring device.

For example, preferably, the unequal parameter of the rod lens array is represented by the formula (8) or (11) and has a relationship represented by the following formula (12) as a rod lens array mounted on the image measuring device. By limiting the unequal parameter in this way, it is possible to improve equal magnification.

$$TC \cdot \Delta X_k / Z \leq 0.1 \, [mm] \qquad (12)$$

On the other hand, since excessive limitation of the unequal parameter may significantly reduce a yield in manufacture of a rod lens array as an industrial product, the unequal parameter preferably satisfies the following formula (13) .

$$0.01 \, [mm] \leq TC \cdot \Delta X_k / Z \qquad (13)$$

In addition, the unequal parameter may satisfy the following formula (14) by making the limiting conditions represented by the formulas (12) and (13) stronger.

$$0.025 \, [mm] \leq TC \cdot \Delta X_k / Z \leq 0.07 \, [mm] \qquad (14)$$

(Manufacture of glass rod lens)

A glass rod lens is manufactured by forming a refractive index distribution from a center of a glass body toward a periphery thereof by an ion exchange method. In this ion exchange method, a glass body containing a first cation that can be used as a network modified oxide and a molten salt containing a second cation that can constitute the network modified oxide are brought into contact with each other at a high temperature, and the first cation in the glass is replaced with the second cation in the molten salt. As a method for manufacturing a rod shape of such a gradient index rod lens, the following three types are generally performed.

(1) Shaving method

A rod having a predetermined shape is manufactured by shaving a glass block. In this method, the number of rods that can be manufactured at a time is small, and it is difficult to manufacture a rod having a rod diameter of 0.5 mm or less.

(2) Rod spinning method

A block-shaped raw material glass is processed to manufacture a base material rod having a diameter of about 20 mm to 50 mm and a length of about 200 mm to 800 mm, and the base material rod is suspended in a tubular furnace and stretched while being heated to obtain a glass rod. As compared with the shaving method, productivity is dramatically improved, and the rod spinning method can be applied even to one having a small diameter. Note that devitrification is relatively less likely to occur, but a spinning speed is as slow as about 1 m/min, and it is necessary to perform a spinning step in units of rods. Therefore, the rod spinning method is not suitable for mass production. In addition, it is considered to be relatively difficult to manufacture a rod having a core/cladding double structure described later.

(3) Direct spinning method (continuous spinning method)

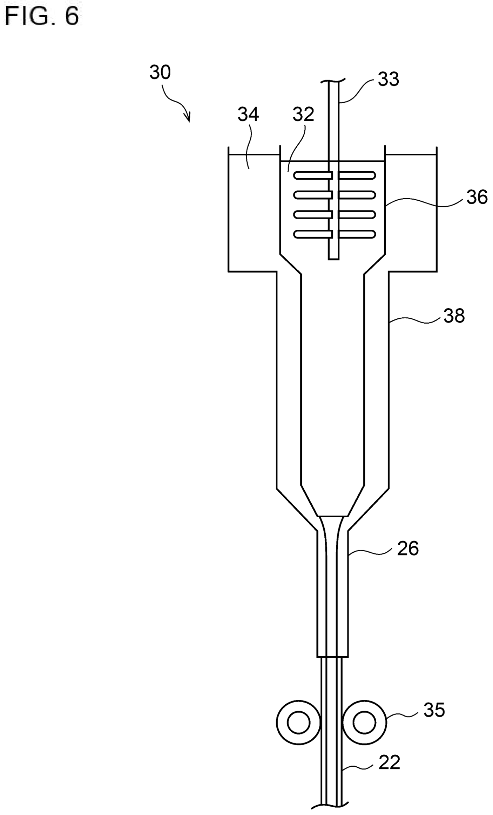

Fig. 6 is a schematic view for explaining a double spinning apparatus 30 used in a direct spinning method (continuous spinning method). The double spinning apparatus 30 illustrated in Fig. 6 includes a crucible 36 for a core portion glass raw material 32, a crucible 38 for a cladding portion glass raw material 34, a stirring stirrer 33, a nozzle 26, and a drawing roller 35.

In the direct spinning method, as illustrated in Fig. 6, dissolved raw material glasses 32 and 34 that have been subjected to dissolution, defoaming, and clarification treatment are kept warm by a heater in the crucibles 36 and 38, respectively, gradually cooled while the dissolved raw material glasses 32 and 34 are caused to flow down in the cylindrical nozzle 26, and discharged from a lower end of the nozzle 26 to continuously mold a glass rod (fiber) 22 having a diameter of about 0.1 to 4 mm by thermal stretching. Since a spinning speed can be several tens of times that of the rod spinning method, and continuous production is possible by continuously inputting the raw material glasses 32 and 34, the direct spinning method has very high productivity. Note that the dissolved raw material glass 32 is supposed to constitute a core portion, and the dissolved raw material glass 34 is supposed to constitute a cladding portion.

In the double spinning apparatus 30, the double structure glass rod 22 in which a lens base material is covered can be easily manufactured by doubling the shape of the nozzle 26. The double spinning apparatus 30 may be disposed in a heating furnace (not illustrated) so as to be able to heat the glass to a glass-meltable temperature.

When a composition in which devitrification is less likely to occur is used as a composition of the covered glass having a double structure, it is possible to avoid contact between the lens base material glass and the nozzle portion in a temperature range in which devitrification is likely to occur in the direct spinning method. Therefore, devitrification in the lens base material glass can be suppressed, and spinning performance is improved as a whole.

When the rod has a double structure, for example, an absorption layer having an effect of removing stray light (also referred to as a colored layer by containing a coloring component) can be added to the rod lens by introducing a coloring component into the covered glass. In addition, it is often possible to impart better characteristics than a single structure, such as suppressing cracks that are likely to be generated by stress generated in the lens base material portion at the time of ion exchange.

In a covered glass or a covered rod lens, a covering portion may be referred to as cladding, a portion other than the covering portion may be referred to as a core, and the covered glass or the covered rod lens may be referred to as a core/cladding structure. In an optical field, for example, an optical fiber has a structure in which a cross section obtained by covering a core having a relatively high refractive index with cladding having a relatively low refractive index is concentric, and light is transmitted while confined in a portion of the core. This is because, in the rod lens, a portion closer to a central portion through which light contributing to formation of an image passes is considered as a core, and a cover portion covering the core is considered as cladding in consideration of this circumstance.

In a case where a glass rod having a core/cladding double structure is mass-produced, the direct spinning method is generally advantageous. In a method for manufacturing a glass rod having such a double structure, in the double spinning apparatus 30 illustrated in Fig. 6, the glass raw material 32 constituting the core portion is put into the crucible 36 on an inner side and brought into an appropriate molten state, the glass raw material 34 constituting the cladding portion is put into the crucible 38 on an outer side and brought into an appropriate molten state, and then the glass in each portion is down-drawn from the nozzle 26 on a lower side so as to maintain the core/cladding structure. The diameter of the glass rod 22 may be adjusted by adjusting a viscosity of the molten glass, a rotation speed and a torque of a tension roller that pulls the glass rod 22 from below, and the like. As the method for manufacturing a glass rod having a double structure, for example, known techniques disclosed in JP 63-301901 A, JP 2004-151682 A, JP 2004-151682 A, and JP 2006-56768 A can be used.

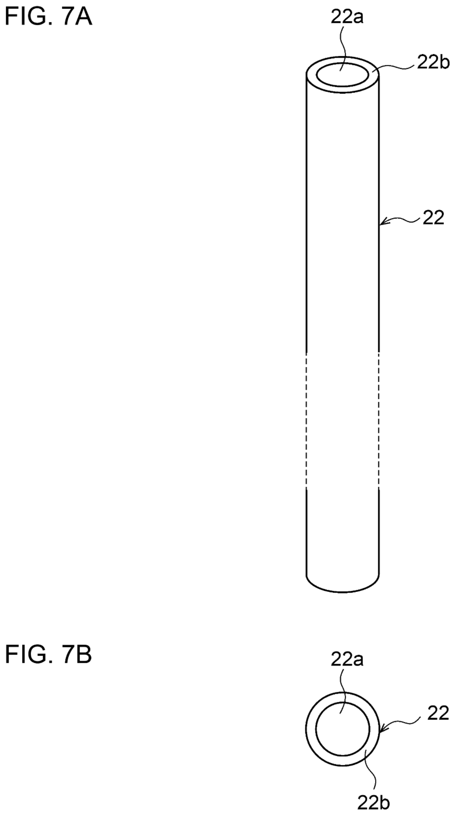

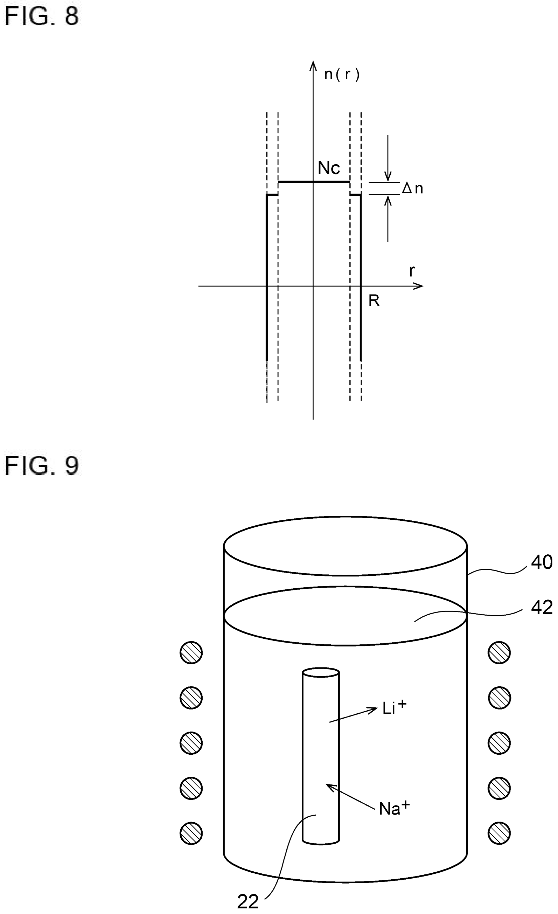

Fig. 7A is a perspective view of the manufactured glass rod 22, and Fig. 7B is a cross-sectional view thereof. Fig. 8 is a diagram illustrating a relationship between a radius and a refractive index in the glass rod 22. As illustrated in Figs. 7A and 7B, the glass rod 22 includes a core portion 22a and a cladding portion 22b. The diameter (wire diameter) of an outer shape of the manufactured glass rod 22 having a core/cladding structure is 0.05 mm to 1.5 mm in consideration of the radius of a rod lens to be finally obtained.

A range of a composition of a glass rod having a core/cladding structure prepared and manufactured by the above method can be exemplified in Table 1 below. In addition, the composition can be appropriately selected from glass compositions having a core/cladding structure described in JP 2004-151682 A, JP 2006-56768 A, JP 2006-106324 A, and JP 2020-121922 A, but is not limited thereto. It should be noted that the composition of the glass rod is not limited to the glass compositions described in Table 1 and the above publications as long as the object or function of the present invention is exhibited.

[Table 1]

| | First glass composition range | | Second glass composition range | | Third glass composition range | |
|---|---|---|---|---|---|---|
| | Core portion | Cladding portion | Core portion | Cladding portion | Core portion | Cladding portion |
| $SiO_2$ | 40~65 | 45~65 | 45~65 | 45~65 | 45~65 | 45~65 |
| $TiO_2$ | 1~10 | 0.5~10 | 0~10 | 0~10 | 0~10 | 0~10 |
| $B_2O_2$ | 0~20 | 0~15 | 1~15 | 0~10 | 0~15 | 0~15 |
| $Al_2O_3$ | 0~10 | 0~7 | | | | |
| $Bi_2O_3$ | | 0.1~10 | | 0~10 | | |
| $Li_2O$ | 0.5~12 | 0~5 | 3~20 | 0~15 | 3~20 | |
| $Na_2O$ | 2~20 | 5~30 | 3~15 | 3~30 | 3~15 | 3~35 |
| $K_2O$ | | 0~10 | 0~10 | 0~10 | 0~10 | |
| $MgO$ | 0~16 | 0~15 | 0~15 | 0~15 | 0~15 | 0~15 |
| $CaO$ | 0~15 | 0~10 | | | | |
| $SrO$ | 0.1~12 | 0~10 | 0~20 | 0~20 | | |
| $BaO$ | 0.1~12 | 0.5~10 | 0~20 | 0~20 | 0~20 | |
| $ZrO_2$ | | 0~7 | 0~7 | 0~7 | | |
| $Sb_2O_3$ | 0~1 | 0~1 | | | | |
| $Fe_2O_3$ | | 0.1~5 | | 0.1~5 | | |
| $CoO$ | | 0.1~5 | | 0.1~2 | | |
| $Y_2O_3$ | 0~5 | 0~7 | 0~7 | 0~7 | | |
| $ZnO$ | 0~8 | 0~10 | 0~10 | 0~10 | 0~10 | |
| $Nb_2O_5$ | 0~5 | 0~7 | 0~7 | 0~7 | | |
| $In_2O_3$ | 0~5 | 0~7 | 0~7 | 0~7 | | |
| $La_2O_3$ | 0~5 | 0~7 | 0~7 | 0~7 | 0~7 | |
| $Ta_2O_5$ | 0~5 | 0~10 | 0~10 | 0~10 | | |
| $Cs_2O$ | 0~3 | 0~10 | | | | |

In the prepared glass rod 22 having a core/cladding structure, the cladding portion 22b (also referred to as a cladding layer because the cladding portion 22b is in a covering form and has a constant thickness in a radial direction) may include an absorption portion (or referred to as an absorption layer because the absorption portion has a constant thickness in the radial direction) that absorbs a part of light having a wavelength in a range of at least 380 nm to 780 nm. The cladding portion 22b may contain any one element of Fe, Co, Ni, Mn, Cr, Cu, Ag, Ti, Ru, V, and Mo. The cladding portion 22b may contain any one element of Fe, Co, Ni, Mn, Cr, and Cu. These elements may be contained as oxides. By containing these elements, it can be expected to increase light absorption performance.

In the glass rod 22 having a core/cladding structure, a refractive index of the cladding portion 22b may be smaller than a refractive index of the core portion 22a and may be 1.50 to 1.65, and a refractive index of the core portion 22a may be 1.52 to 1.66 (both represent values when a measurement wavelength is 570 nm) from a viewpoint of suppressing so-called stray light (including a light ray that does not contribute to formation of an image and a light ray that may cause flare light as described above) and expecting a light confinement effect.

The glass rod 22 having a core/cladding structure thus prepared is immersed in a molten salt of sodium nitrate maintained at a temperature near a glass transition point of glass (core glass) contained in the core portion 22a, and a refractive index distribution is formed in the glass rod 22 by an ion exchange method to manufacture the gradient index rod lens 12. As a method for providing a refractive index distribution in the glass rod 22 by ion exchange, for example, publications such as JP 2004-151682 A, JP 2006-56768 A, and JP 2006-106324 A can be referred to.

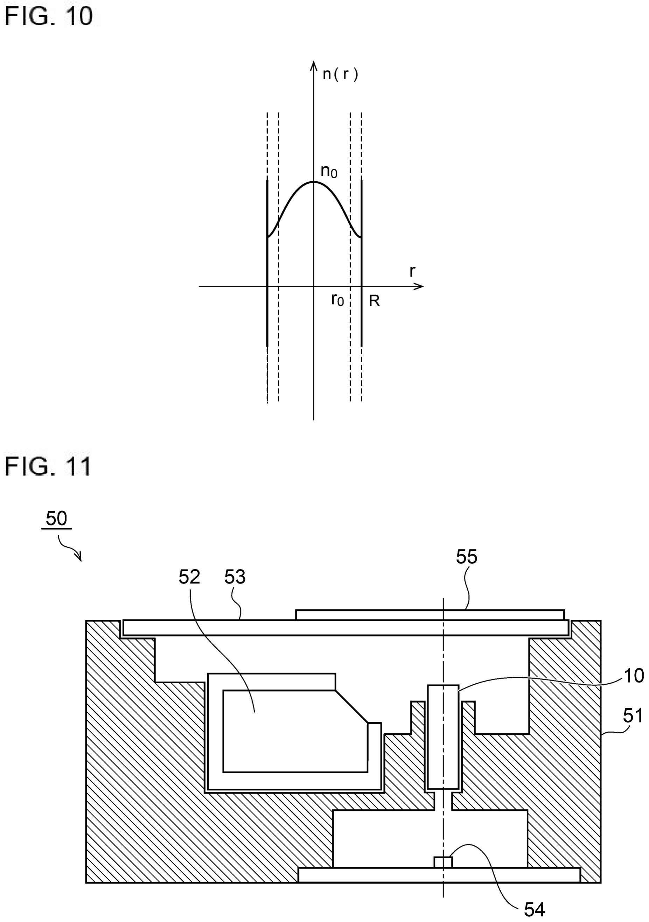

Fig. 9 is a conceptual diagram for explaining a state of ion exchange. For example, a stainless steel container 40 contains a molten salt 42 of sodium nitrate or potassium nitrate. The glass rod 22 manufactured above is immersed in the molten salt 42, and a Li ion as the first cation (X) in the glass is replaced with a Na ion or a K ion as the second cation (Y) in the molten salt to form a concentration distribution of a specific ion or a compound thereof, and a refractive index distribution (dielectric constant distribution) corresponding to this concentration distribution is imparted. In this way, a gradient index rod lens is obtained (it should be noted that the lens does not strictly have an incident/emission surface because a refractive index distribution is merely formed in the rod. Such a rod in which a refractive index distribution is formed is to be processed as a lens through steps such as cutting and polishing). Fig. 10 is a diagram illustrating a relationship between a radius and a refractive index in the glass rod to which the refractive index distribution has been imparted.

The first cation (X) such as a Cs ion or a Tl ion contained in the glass may be replaced with the second cation (Y) such as a Na ion or a K ion in the molten salt. Optical characteristics brought about by a distribution of each cation are unique to the cation, and may be selected by a manufacturer according to an application and a function of a required gradient index lens.

A part of the action of the glass rod 22 having a core/cladding structure by ion exchange will be further described. In a case where the cladding portion 22b contains the above-described elements such as Fe, Co, Ni, Mn, Cr, Cu, Ag, Ti, Ru, V, and Mo, the elements or an oxide containing the elements may remain in the cladding portion 22b without largely moving or diffusing in the glass. By action of these elements contained as light absorption components, an attempt to cause the cladding portion 22b to include the absorption layer is maintained.

To the glass rod 22 to which the refractive index distribution is imparted, an action of forming irregularities on a peripheral surface of the glass rod 22 may be applied as necessary. As one specific method, the ion-exchanged glass rod lens 12 may be immersed in a mixed solution of hydrofluoric acid, ammonium fluoride, and water (hereinafter, referred to as a flare cut liquid) for several minutes to form fine irregularities on a side surface of the rod lens 12 by a chemical action thereof. Note that, in order to achieve the object of the present invention as described above, a surface roughness of a peripheral surface of the glass rod 22 may be, for example, Ra = 0.05 $\mu$m to 0.5 $\mu$m in terms of arithmetic average roughness Ra by a chemical action. When the side surface of the glass rod 22 to which the refractive index distribution has been imparted is very smooth, for example, when Ra < 0.05 $\mu$m is satisfied, depending on a glass composition of the glass rod 22 to be used and conditions of ion exchange, a step of chemically imparting such irregularities may be added. In addition, as a method for imparting irregularities, in addition to a method for immersing the glass rod 22 in a solution containing a fluoride as described above, a side surface thereof may be rubbed with a sandblast or sandpaper to form irregularities. The step of imparting the irregular surface to the side surface of the glass rod 22 or the rod lens 12 imparts a function of attenuating light that does not contribute to formation of an image or converging to an image point, which may be flare light among light rays that have passed through the rod lens 12, by scattering, diffuse reflection, or the like in the rod lens array 10, and thus may be referred to as flare cut (step) (for technical information on the flare cut, see JP 50-44844 A and JP 2002-318302 A).

Hydrofluoric acid has an action of dissolving glass. The diameter of the glass rod 22 to which the refractive index distribution has been imparted by ion exchange may vary between the rods. In addition, since the ion exchange is performed by immersing a rod having a length exceeding several tens cm to 1 m (already having a filament appearance) in a molten salt in the vicinity of a glass transition point, upper and lower diameters of the glass rod 22 may be different (generally, the shape is reversely tapered from the top to the bottom). If the diameter (also referred to as a wire diameter) of the glass rod 22 varies as described above, there is a possibility that the above-described arrangement is disturbed when the glass rod 22 is configured as the rod lens array 10. Therefore, for the purpose of adjusting the wire diameter of the glass rod 22 (adjusting an average value to be within a predetermined range or/and reducing variations), a step of chemically etching a side surface of a rod having a relatively large wire diameter may be added.

(Manufacture of plastic rod lens)

Hereinafter, a method for manufacturing a plastic rod lens will be described. Here, the plastic rod lens to be described has a cylindrical shape with a predetermined radius $r_0$ and has a refractive index distribution in which a refractive index gradually decreases from a center toward a peripheral portion, similarly to the glass rod lens. The plastic rod lens has many advantages, for example, the plastic rod lens has an image forming action even when both end surfaces are flat, and a lens having a small diameter can be easily manufactured. On the other hand, although heat resistance and the like are slightly inferior to those of glass, the heat resistance and the like are also being improved in recent years, and a range of application of the plastic rod lens is also expanded. To the characteristic of the plastic rod lens, the matters described for the glass rod lens can be appropriately applied.

As a method for manufacturing the plastic rod lens, a mutual diffusion method can be exemplified. First, an uncured resin composition to be a precursor of a plastic is concentrically stacked such that a post-curing refractive index decreases from a center toward an outer peripheral portion to manufacture a filament. The filament is cured while mutual diffusion of substances is performed between adjacent layers and after mutual diffusion is performed such that refractive index distributions of the layers are continuous, thereby manufacturing a rod lens original yarn. As a curing method, a curing method by thermal curing or energy irradiation such as an ultraviolet ray may be used. The resin composition may contain a monomer such as a fluorinated alkyl (meth)acrylate having a post-curing refractive index of 1.37 to 1.44 or a (meth)acrylate having a post-curing refractive index of 1.43 to 1.62, or a polymer such as a polymethyl methacrylate having a refractive index of 1.49 or a polymethyl methacrylate having a refractive index of 1.47 to 1.60. Furthermore when a curing method is selected, a thermal catalyst or a photocuring catalyst corresponding to the curing method may be contained in the resin composition in advance. Curing by energy irradiation such as an ultraviolet ray is advantageous because a time until curing is short, and examples of a photocuring catalyst include benzophenone and a compound thereof, benzoisoalkyl ether, 4'-isopropyl-2-hydroxy-2-methylpropiophenone, 1-hydroxycyclohexyl phenyl ketone, and triethylamine. In some cases, a polymerization inhibitor containing hydroquinone, hydroquinone monoethyl ether, phenothiazine, or the like may be appropriately contained as necessary for the purpose of controlling a reaction in the filament.

In addition, the plastic rod lens may have a light absorbing layer containing a light absorber that absorbs a part of light that passes through the plastic rod lens at an outer peripheral portion away from the central axis by $0.6 \times r_0$ or more. In manufacture of the rod lens original yarn of the plastic rod lens, as a distance from the central axis increases, a refractive index distribution tends to have an irregular portion deviating from a required refractive index distribution. Light that passes through such an irregular portion does not contribute to formation of an image or becomes flare light to cause a decrease in contrast of the image. By forming a light absorbing layer of, for example, 50 μm to 100 μm on an outer peripheral portion of the plastic rod lens, flare light and crosstalk light can be suppressed.

As the light absorber to be used, it is possible to select a light absorber having a corresponding absorption band according to a required (mainly related to a wavelength) specification of an image scanner or the like. Examples thereof include CY-10, CY-17, CY-5, CY-4, CY-2, CY-20, CY-30, and IRG-002 of Kayasorb series manufactured by Nippon Kayaku Co., Ltd., YKR-4010, YKR-3030, YKR-3070, YKR-2900, SIR-159, PA-1005, SIR-128, and YKR-2080 manufactured by Yamamoto Chemical Co., Ltd., crystal violet, ethyl violet, and Victoria blue manufactured by Mitsubishi Chemical Corporation, and PS Yellow GG, PS Red G, PS Brilliant Red Hey, and PET Yellow 1000 manufactured by Mitsui Fine Chemicals, Inc. One or more of these may be selected.

The light absorbing layer can be formed in the rod lens original yarn by adding the light absorber to a resin composition of any layer or an outermost layer and kneading the mixture when the filament is manufactured. The light absorbing layer may have two or more layers. A plurality of light absorbers having different light absorption bands can be included in different layers, and in this case, it is possible to suppress a disadvantage that the light absorbers affect each other to change initial light absorption characteristics.

The rod lens original yarn may be wound around a bobbin or the like after being subjected to a heat stretching treatment. In addition, the rod lens original yarn may be wound around a bobbin and then subjected to a heat stretching treatment as necessary. A required diameter of the rod lens can be adjusted by the stretching treatment. In addition, the rod lens original yarn is immersed in, for example, a chloroform solution for a predetermined time to make the inside of the resin wet with chloroform. Furthermore, by causing the rod lens original yarn to pass through a through hole having a predetermined diameter and made of an elastic body thereof or the like to peel off an outer peripheral portion, the rod lens original yarn having a required diameter may be manufactured.

(Manufacture of rod lens array)

Next, a method for manufacturing the rod lens array 10 will be described. A side surface of the glass rod 22 or the rod lens original yarn to which a refractive index distribution is imparted, or a side surface of the glass rod 22 to which the refractive index distribution is imparted and then which is subjected to flare cut may be coated with a black composition. An object is to absorb, inside the rod lens array 10, a light ray that may be flare light when rod lens array 10 is manufactured from the glass rod 22 in which a refractive index distribution is formed. In a normal lens (for example, an optical element having a concave surface, a convex surface, a flat surface, a diffraction grating surface, and the like, and configured to refract or diffract light on these surfaces to diverge or converge the light), an equivalent action by black coating or the like of a peripheral edge portion or an edge surface may be expected. As a material to be used for coating, a resin such as an epoxy resin, an acrylic resin, a polyurethane resin, a phenol resin, a melamine resin, an unsaturated polyester resin, an alkyd resin, or a silicone resin is desirable, and one of these resins or a mixture of two or more thereof may be used. Furthermore, the material may be colored so as to absorb at least a part of flare light (precisely, light that can be flare that does not contribute to image formation when light is emitted from the rod lens array 10) or stray light, or may be black. Furthermore, a lustreless appearance after curing is desirable. As the material to be used for coating, the above resin may further contain black particles such as carbon black, titanium black (titanium-based black pigment), magnetite type triiron tetraoxide, an oxide containing copper and chromium, and VALIFAST black (azochrome compound). In addition, the rod lens original yarn may be immersed in a chloroform solution containing VALIFAST black (manufactured by ORIENT CHEMICAL INDUSTRIES CO., LTD.) to be coated, and chloroform may be evaporated and dried to manufacture the glass rod 22 or the rod lens original yarn dyed in black.

In a case where the rod lenses 12 (a glass rod lens and a plastic rod lens) thus manufactured are arranged in an array to form the rod lens array 10, an arrangement method thereof is not particularly limited, and for example, a zero-dimensional arrangement to a two-dimensional arrangement can be considered. It is considered that, as the zero-dimensional arrangement, for example, one lens is arranged alone (as a single rod lens 12) to be used as an optical element.

The rod lens array 10 illustrated in Fig. 1 is formed by arranging the rod lenses 12 in a two-dimensional array. The rod lens array 10 includes a plurality of gradient index rod lenses 12. The rod lenses 12 are aligned such that optical axes of the rod lenses 12 are substantially parallel to each other, and are integrated together with the pair of plate-shaped substrates 14 and 16 and the black resin. The black resin is a curable resin, and may contain organic or inorganic black particles such as carbon black, titanium black (titanium-based black pigment), magnetite type triiron tetraoxide, an oxide containing copper and chromium, and VALIFAST black (azochrome compound), or a black filler so as to exhibit black, preferably lustreless black. The content of the black particles and the black filler may be 1% to 30% with respect to the black resin. When the content of black particles and the filler is excessively large, viscosity of the resin is significantly increased, and workability is deteriorated, and when the content is excessively small, the degree of black is reduced, and a function of absorbing light is deteriorated.

In the rod lens array 10, as illustrated in Fig. 1, when a direction parallel to the first surface 13 and/or the second surface 15 of the rod lens 12 is defined as an x direction, the rod lenses 12 are regularly arranged in the x direction. In the coordinates of the rod lens array 10, a direction perpendicular to the x direction and parallel to the first surface 13 and the second surface 15 is defined as a y direction, and a direction perpendicular to the x direction and the y direction is defined as a z direction. The x direction or an arrangement direction of the rod lenses 12 is defined as a main scanning direction, and the y direction is defined as a sub-scanning direction. In the rod lens array 10 in Fig. 1, one rod lens 12 is arranged in the y direction (one-line arrangement). In the rod lens array 10, the rod lenses 12 may be arranged in one line in the y direction as illustrated in Fig. 1, or may be arranged in two or more lines in the y direction.

In such a rod lens array 10, a plurality of rod lenses 12 are aligned substantially in parallel on one surface of the plate-shaped substrate 14 as one substrate, the rod lenses 12 are sandwiched by the plate-shaped substrate 16 as the other substrate, and then a gap between the pair of plate-shaped substrates 14 and 16 is filled with a black resin to integrate the whole. A large number of grooves may be formed on the surfaces of the plate-shaped substrates 14 and 16 on which the rod lenses 12 are arranged, and at this time, accuracy of an arrangement pitch of the rod lenses 12 can be improved. In addition, the rod lens array is arranged on a grooved surface plate, and covered with the plate-shaped substrate 14 as one substrate and temporarily fixed, and then reversed, whereby the rod lens array with higher arrangement accuracy can be arranged on the plate-shaped substrate 14 while an arrangement pitch and accuracy of the grooved surface plate are maintained.

As the rod lens 12, a short glass rod or rod lens original yarn obtained by preliminarily further cutting a long glass rod or rod lens original yarn having a length of several tens cm to more than 1 m, specifically, 1.8 m at a maximum, through impartment of a refractive index by ion exchange or mutual diffusion, and in some cases, through flare cut or black coating, into several centimeters to several tens cm is used.

A material, size, and thickness of each of the plate-shaped substrates 14 and 16 are not limited as long as the plate-shaped substrates 14 and 16 have predetermined rigidity and can sandwich and fix a plurality of rod lenses. Examples of the plate-shaped substrates 14 and 16 to be used include, but are not limited to, an epoxy resin, a phenol resin, a polyamide resin, an ABS resin, a polypropylene resin, an acrylonitrile resin, a PBT resin, and an acrylic resin, and fiber reinforced plastics (FRP) obtained by compounding glass fibers or carbon fibers with these resins to improve mechanical strength thereof can be preferably used.

As the black resin, a curable resin such as an epoxy resin or a silicone resin containing the above-described black particles such as carbon black, titanium black, and an azochrome compound may be adopted.

The gradient index rod lens 12 or the rod lens array 10 can change an effective focal length, a working distance (WD) when used in an image forming system of an erect equal magnification, and the like by changing a length thereof. Therefore, the rod lens array 10 can be manufactured by cutting a precursor of a rod lens array constituted using a short glass rod or rod lens original yarn to a length that can exhibit a predetermined working distance or optical performance and polishing a cut surface of an end surface thereof.

Fig. 11 illustrates an image sensor 50 as an example of an optical device using the rod lens array 10. The image sensor 50 illustrated in Fig. 11 may be long in a direction perpendicular to a paper surface, for example. The image sensor 50 illustrated in Fig. 11 includes a linear illumination device 52, a document table 53 constituted by a glass plate (contact glass), the rod lens array 10, and a linear light receiving device 54 in a housing 51. The rod lens array 10 is placed on an optical path in which when a document 55 is placed on the document table 53, the linear illumination device 52 irradiates the document 55 with illumination light, and light reflected on a surface of the document 55 is incident on the light receiving device 54. The rod lens array 10 constitutes an erect equal-magnification system image forming optical system that forms an image of light reflected on the surface of the document 55 by the light receiving device 54. The image sensor 50 illustrated in Fig. 11 is an example of a CIS because the image sensor 50 reads the document 55 on the document table 53. Such an image sensor 50 may be mounted on a reading device such as a copying machine or a facsimile machine, for example, and may be distributed to the market only by the image sensor 50 due to a configuration of a supply chain.

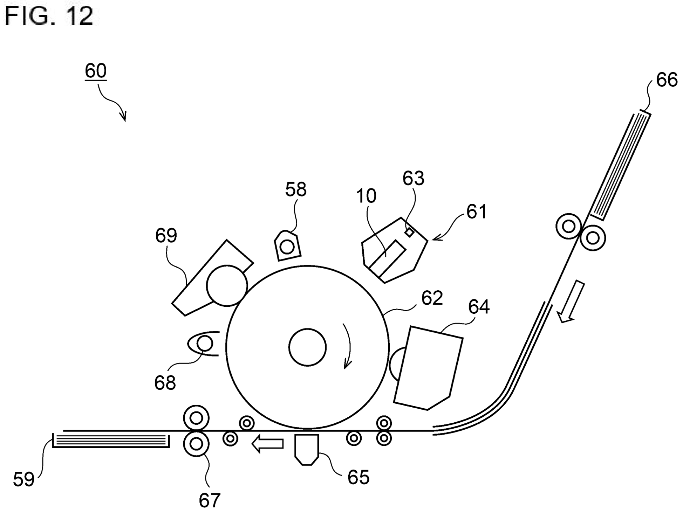

Fig. 12 illustrates an optical printer (LED type) 60 as an example of an optical device using the rod lens array 10. The optical printer 60 illustrated in Fig. 12 is a device that exposes light to a photosensitive drum 62 by a writing head 61 to form an image (latent image) and fixes the formed image on a sheet. The writing head 61 includes the rod lens array 10 and a light emitting element array 63, and the rod lens array 10 constitutes an erect equal-magnification system imaging optical system that exposes light emitted from the light emitting element array 63 constituted by an LED array onto the photosensitive drum 62.

The optical printer 60 illustrated in Fig. 12 has a configuration similar to that of a general optical printer, and an image is formed on a sheet by a mechanism similar to that of the general optical printer. Specifically, a photosensitive layer made of a photoconductive material (photosensitive member) such as amorphous Si is formed on a surface of the cylindrical photosensitive drum 62. First, a surface of the rotating photosensitive drum 62 is uniformly charged by a charging device 58. Next, the photosensitive layer of the photosensitive drum 62 is irradiated with light of a dot image corresponding to an image to be formed by the writing head 61, and charging of a region irradiated with light in the photosensitive layer is neutralized to form a latent image on the photosensitive layer. Next, when a toner is attached to the photosensitive layer by a developing device 64, the toner is attached to a portion where the latent image is formed on the photosensitive layer according to a charged state of the photosensitive layer. Next, the attached toner is transferred onto the sheet sent from a cassette 66 by a transfer device 65, and then heat is applied to the sheet by a fixing device 67. As a result, the toner is fixed to the sheet to form an image. Thereafter, the sheet is stored in a stocker 59. On the other hand, in the photosensitive drum 62 that has completed the transfer, charging is neutralized in the entire region by an erasing illumination 68, and the toner remaining on the photosensitive layer is removed by a cleaning device 69.

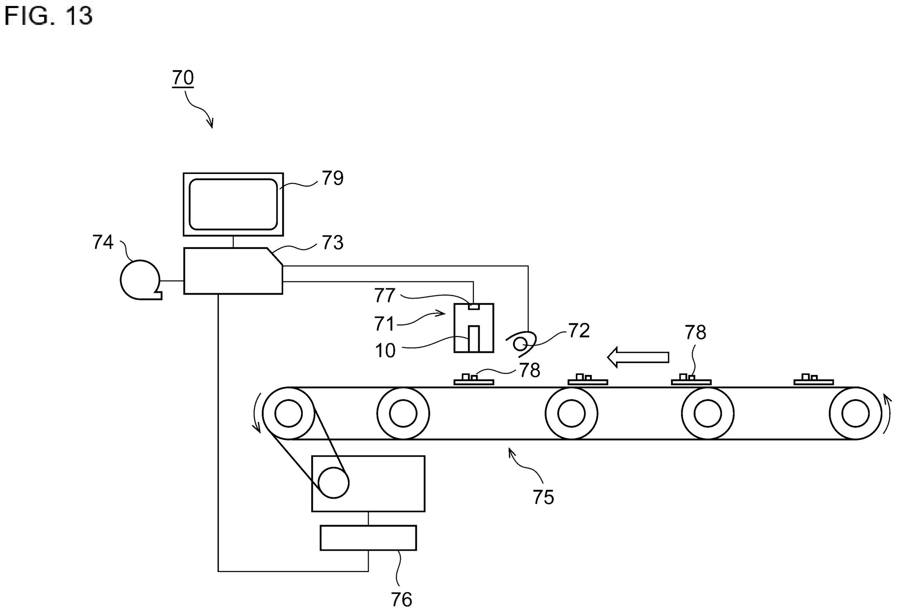

Fig. 13 illustrates an image inspection device 70 as an example of an optical device using the rod lens array 10. The image inspection device 70 includes an image sensor 71, a linear illumination device 72 as a light source, a control device (a computer or a device including a computer) 73, a storage device 74 such as an HDD, an SSID, or a RAM, an output device 79 such as a display, a conveyance device 75 including a conveyor and a motor for driving the conveyor, and a conveyance device driver 76 for driving the conveyance device 75.

The rod lens array 10 and a light receiving element 77 are arranged inside the image sensor 71. The conveyance device 75 is, for example, a belt conveyor. The conveyance device 75 conveys an inspection object to be used for acquisition of appearance information in a certain region. Examples of the inspection object 78 are not limited to the following, but as the inspection object 78, any product or semi-product including all industrial components such as a printed circuit board (it does not matter whether components are mounted on the printed circuit board or not), an electronic component, an optical component, and a mechanical component, textiles, documents, and papers (including photographs, drawings, pictures, and the like) is conveyed. The conveyance device driver 76 may include a digital computer for controlling the conveyance device 75, and may output a control signal for adjusting a conveying speed and torque of the conveyance device 75 toward the conveyance device 75. In Fig. 13, a three-dimensional structure is described as the inspection object, but the inspection object may be a substantially planar object having no height difference, and it should be noted that these are merely examples.

The image sensor 71 and the linear illumination device 72 are arranged, for example, above the conveyance device 75, and the inspection object 78 passes directly below the image sensor 71 by the conveyance device 75. The image sensor 71 and the linear illumination device 72 are arranged so as to obtain clear image data of the inspection object 78.

The control device 73 may include a digital computer for forming image data of the inspection object 78 under a predetermined program or application. When the inspection object 78 passes directly below the image sensor 71, the control device 73 continuously acquires one-dimensional image information from the image sensor 71. In addition, the control device 73 acquires conveyance position information of the inspection object 78 from the conveyance device driver 76. The control device 73 performs calculation processing on the basis of the one-dimensional image information acquired from the image sensor 71 and the conveyance position information acquired from the conveyance device driver 76 to form two-dimensional image information. The formed two-dimensional image information is compared with information characterizing a defect such as a foreign substance, a crack, or a pinhole stored in advance in the control device 73 or the storage device 74. As a result, the control device 73 specifies presence or absence of a defect, the number of defects, and the position of the defect in the inspection object 78. The control device 73 may determine quality of the inspection object 78 on the basis of the comparison result. The output device 79 is, for example, a display, and may display the two-dimensional image information formed by the control device 73.

After obtaining such two-dimensional image information, the image inspection device 70 according to the present embodiment may calculate a dimension, a distance, or an interval of a predetermined portion, or may calculate a specific area on the basis of these. The image inspection device 70 is the rod lens array 10 that satisfies the above formulas (12) and (13) at an effective length in the main scanning direction, which is an embodiment of the present invention, and therefore can perform highly accurate measurement with a measurement accuracy of 0.005 mm or less.

Furthermore, by causing the image sensor including the rod lens array 10 to perform scanning in the z direction, it is also possible to measure any height at which focus can be adjusted.

Hereinafter, Examples of the rod lens array 10 according to the present invention will be exemplified. The present invention is not limited to specific configurations and functions of the following Examples.

Here, the glass rod 22 having a substantially circular cross section was manufactured by a down draw method using the double spinning apparatus 30 illustrated in Fig. 6 schematically illustrating only a portion necessary for description. The glass raw materials 32 and 34 necessary for constituting the core portion 22a and the cladding portion 22b of the glass rod 22 were prepared by appropriately selecting a composition and a blending ratio illustrated in Table 1. The glass raw materials were put into the respective crucibles 36 and 38 corresponding to the core portion 22a and the cladding portion 22b, heated, stirred, and melted. At a time point when an appropriate molten state and viscosity were confirmed, the glass rod 22 was pulled out from the lower nozzle 26 in a state where the core portion 22a at a central portion was covered with the cladding portion 22b.

The diameter of the glass rod 22 can be changed by appropriately adjusting a viscosity, a temperature, and a molten state of the glass melt melted in each of the crucibles 36 and 38 in the apparatus, and a rotation speed of the drawing roller 35, and a glass rod 22 having a diameter within an allowable range and a small variation could be manufactured by performing advanced control such as PID. In manufacturing the rod lenses used in Examples of the present invention, glass rods 22 having core/cladding structures of Nos. 1 to 4 and NO. 6, which are base material glass of the rod lens, were manufactured. A glass raw material was appropriately adjusted within a range of a raw material and content of any of the embodiments illustrated in Table 1 in order to obtain a glass rod 22 having a required specification.

Furthermore, in the spinning device illustrated in Fig. 6, a glass rod 22 including only a so-called core portion was manufactured without down-drawing the glass raw material 34 for constituting the cladding portion. The glass rod 22 including only the core portion was referred to as a glass rod of No. 5.

In accordance with JIS B7021-2 (2018), a refractive index $N_c$ of each of glass rod core portions of Nos. 1 to 6 before formation of a refractive index distribution was measured by a V block method at a wavelength $\lambda_0 = 570$ nm by cutting out base material glass made of the same composition as that of each glass rod core portion to manufacture a rectangular parallelepiped sample having a cross-sectional area of 15 mm square. On the other hand, a concentration of a Li ion, which is the first cation (X) as one of dominant elements of a refractive index in ion exchange, does not change at a central portion of the rod. Therefore, it is considered that a refractive index n(0) at a central portion of the rod is equal to the refractive index $N_c$ of the glass rod before the ion exchange, and thus, $n_0 = N_c$ was adopted.

The obtained glass rods 22 of Nos. 1 to 6 were immersed in a molten salt 42 of sodium nitrate held at a temperature of about 500°C for a predetermined time as illustrated in Fig. 9, and ion exchange was performed mainly between Li ions contained in the glass and Na ions in the molten salt to form a concentration gradient of a metal component related to the ion exchange in a radial direction inside the glass, and a refractive index distribution corresponding thereto was imparted, thereby obtaining glass rods with refractive index distribution of Nos. 1' to 6', respectively.

Furthermore, the obtained glass rods with refractive index distribution of Nos. 2', 3', and 5' were subjected to a so-called flare cut treatment in which a surface roughness of a rod peripheral surface represented by arithmetic average roughness was adjusted while a concentration and a temperature of ammonium fluoride or hydrofluoric acid were adjusted to form minute irregularities on peripheral surfaces of the glass rods with refractive index distribution. Before and after the flare cut, the peripheral surfaces of the glass rods with refractive index distribution were etched with hydrofluoric acid as necessary to adjust the diameters of the rods.

Next, side surfaces of the glass rods with refractive index distribution after completion of these operations were coated with a black resin to manufacture glass rods with refractive index distribution of Nos. 2', 3', and 5' before being cut short. The glass rods of Nos. 1', 4', and 6' were not flare-cut or coated with a black resin.

In order to examine main characteristics of the obtained glass rods with refractive index distribution, first, the glass rods of Nos. 1' to 6' were cut along a plane perpendicular to the central axis, and the cut surface was mirror-polished to manufacture cylindrical glass rods with refractive index distribution having a length suitable for examining basic period lengths of the glass rods with refractive index distribution.

Next, a sheet on which a grid-like pattern was described was brought into contact with one end surface of this sample, the pattern was illuminated with light having a wavelength of 570 nm, an erected image of the pattern was observed from the other end surface of the sample, and a period length P [mm] of each gradient index lens at a wavelength of 570 nm was determined. Next, a refractive index distribution coefficient g [mm$^{-1}$] of each gradient index lens at a wavelength of 570 nm was obtained on the basis of a relationship of g = 2π/P.

The outer diameter of the glass rod was measured with a micrometer, and the value was divided by 2, thereby obtaining $r_0$ [mm], which is the outer radius (rod radius) of the glass rod with refractive index distribution. At this time, a plurality of glass rod outer diameters of glass rods corresponding to the rod lens 12 to be mounted on one rod lens array 10 may be measured, and an average value thereof may be taken as $r_0$.

A cladding thickness Ct of each of the glass rods with refractive index distribution of Nos. 1' to 6' was measured using a CNC image measuring machine Quick Vision (model: QVT1-X404L1L-C) manufactured by Mitutoyo Corporation. Magnifications of an objective lens and an imaging lens were 2.5 times and 6 times, respectively, and an observation image was displayed on a display of a personal computer. The rod lens was allowed to stand such that an end surface of the rod lens faced the objective lens of the measuring machine, and was illuminated with transmitted light and epi-illumination light, and the position of the measuring machine was adjusted such that a boundary between the core portion and the cladding portion of the lens element and the vicinity thereof and a contour line of a side surface of the rod lens could be observed in the field of view. Since the cladding portion has high absorbability and the core portion has high transmittance, the boundary can be easily specified. Therefore, the cladding thickness $C_t$ of each glass rod with refractive index distribution was obtained by measuring a distance between the boundary between the core portion and the cladding portion and the contour line. Furthermore, from the radius $r_0$ of the glass rod, an effective radius $r_e$ of the glass rod with refractive index distribution was obtained.

Next, from the refractive index distribution coefficient g, the effective radius $r_e$ of the gradient index lens, and the refractive index $n_0$ at the center, aperture angles $\theta_c$ of the glass rods with refractive index distribution of Nos. 1' to 6' were obtained by $\theta_c = n_0 \cdot g \cdot re$. At this time, as the center refractive index $n_0$ of the glass rod, $N_c$, which is a refractive index of the core portion of the glass rod, was used.

The characteristics of the glass rods with refractive index distribution of Nos. 1' to 6' thus obtained are the same as the main characteristics of rod lenses obtained by cutting the glass rods to a predetermined length and polishing the glass rods, respectively. Some of the characteristics of these rod lenses are presented in Table 2.

[Table 2]

|  | No. 1' | No. 2' | No. 3' | No. 4' | No. 5' | No. 6' |
|---|---|---|---|---|---|---|
| Rod radius $r_0$ [mm] | 0.15 | 0.539 | 0.538 | 0.15 | 0.515 | 0.15 |
| Cladding thickness $C_t$ [mm] | 0.03 | 0.02 | 0.02 | 0.01 | - | 0.03 |
| Rod effective radius $r_e$ [mm] | 0.12 | 0.52 | 0.47 | 0.14 | 0.51 | 0.12 |
| Center refractive index $n_0$ | 1.59 | 1.60 | 1.59 | 1.59 | 1.60 | 1.59 |
| Refractive index distribution constant g[mm$^{-1}$] | 0.3888 | 0.1796 | 0.0982 | 0.3685 | 0.1781 | 0.4674 |
| Period length P[mm] | 16.16 | 34.99 | 64.00 | 17.05 | 35.27 | 13.44 |
| Aperture angle $\theta$c [deg] | 4.25 | 8.5 | 4.2 | 4.7 | 8.3 | 5.1 |

Rod lens arrays according to Examples 1 to 5 and Comparative Examples 1 to 3 were manufactured using the above glass rods with refractive index distribution. The characteristics of the rod lens arrays are presented in Table 3.

[Table 3]

| | Example1 | Example2 | Example3 | Example4 | Example5 | Example6 | Comparative Example1 | Comparative Example2 | Comparative Example3 |
|---|---|---|---|---|---|---|---|---|---|
| Rod lens radius $r_0$[mm] | 0.15 | 0.15 | 0.15 | 0.539 | 0.539 | 0.15 | 0.15 | 0.15 | 0.515 |
| Rod lens effective radius [mm] | 0.12 | 0.12 | 0.12 | 0.52 | 0.47 | 0.12 | 0.14 | 0.14 | 0.51 |
| Aperture angle $\theta c$[°C] | 4.25 | 4.25 | 4.25 | 8.5 | 4.2 | 5.1 | 4.7 | 4.7 | 8.3 |
| Lens length Z[mm] | 9.27 | 9.80 | 8.86 | 19.73 | 36.03 | 7.77 | 9.91 | 10.54 | 19.35 |
| Average distance between center axes $p_{av}$ [mm] | 0.305 | 0.305 | 0.305 | 1.080 | 1.080 | 0.305 | 0.325 | 0.325 | 1.050 |
| Inter-lens distance $S_t$[mm] | 0.005 | 0.005 | 0.005 | 0.003 | 0.005 | 0.005 | 0.025 | 0.025 | 0.020 |
| Total conjugate length TC [mm] | 23.0 | 19.2 | 30.0 | 54.0 | 100.0 | 18.5 | 23.0 | 19.3 | 65.0 |
| Working distance WD [mm] | 6.9 | 4.7 | 10.6 | 17.1 | 32.0 | 5.4 | 6.5 | 4.4 | 22.8 |
| Depth of field DOF [mm] | 2.6 | 2.5 | 2.5 | 1.0 | 2.0 | 2.2 | 2.5 | 2.5 | 1.1 |
| Lens filling range $x_e$[mm] | 320.3 | 320.3 | 320.3 | 320.8 | 320.8 | 320.3 | 320.1 | 320.1 | 320.3 |
| Number of arranged lenses | 1050 | 1050 | 1050 | 297 | 297 | 1050 | 985 | 985 | 305 |
| Maximum value of absolute value of difference between positions of centers on first surface and second surface $\Delta x_{max}$ [mm] | 0.030 | 0.020 | 0.025 | 0.007 | 0.014 | 0.02 | 0.095 | 0.100 | 0.035 |
| Change amount from equal magnification image $\Delta_{max}$[mm] | 0.07 | 0.04 | 0.08 | 0.01 | 0.02 | 0.04 | 0.22 | 0.18 | 0.12 |

(Example 1)

The rod lent arrays according to Example 1 to 3 were manufactured by a so-called grooved surface plate arrangement method. A manufacturing process is described below.

The No. 1' glass rod with refractive index distribution was cut to an appropriate length to prepare a glass rod having a length suitable for assembly.

A pair of a first plate-shaped substrate and a second plate-shaped substrate each having a black resin adhesive sheet on one main surface thereof were prepared. Each of the plate-shaped substrates was made of FRP containing an epoxy resin. As the black resin sheet, a sheet containing, as a main component, an epoxy resin containing carbon black as a pigment was used, and the black resin sheet was provided on the entire surface of one main surface of each of the plate-shaped substrates in advance. The plate-shaped substrates are parallel flat plates each having a planar dimension capable of covering side plates of the plurality of rod lens arrays when cut into a strip shape and having a thickness of 0.5 mm.

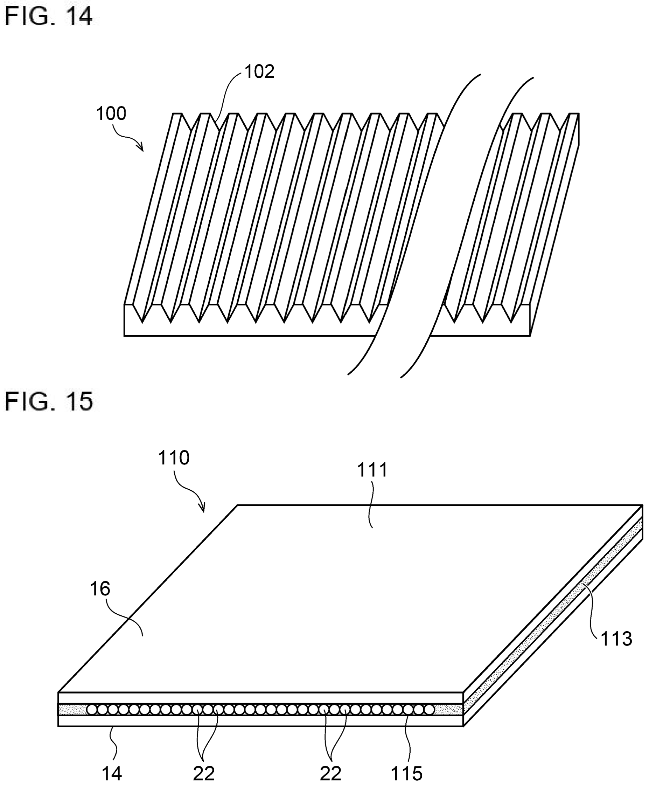

Next, a grooved surface plate having V-shaped grooves formed by arranging a plurality of V-shaped grooves at a predetermined pitch on a surface plate having a flat surface was prepared. Fig. 14 schematically illustrates an example of a grooved surface plate 100. The length of the V groove 102 in an extending direction is longer than the length of the glass rod with refractive index distribution. The pitch of the V grooves 102 was 0.30 mm, and the V grooves 102 were formed with an accuracy of at least less than 5 μm over the extending direction of the V grooves 102. It should be noted that the actual length of the V groove 102 of the grooved surface plate 100 in the extending direction is longer than the length of the glass rod, and the number of V grooves 102 arranged is equal to or larger than the number of rod lenses necessary to cover the effective length of the rod lens array in the main scanning direction.

Fig. 15 is an overall schematic view of a plate-shaped work 110 of a rod lens array. As illustrated in Fig. 15, the plate-shaped work 110 includes a pair of work main surfaces 111 including main surfaces of the first plate-shaped substrate 14 and the second plate-shaped substrate 16, a pair of work edge surfaces 113 including edge surfaces of the plate-shaped substrates 14 and 16 and the spacers 18 and 20, and a pair of lens end surface-side edge surfaces 115 in which end surfaces of the plurality of arranged glass rods 22 can be visually recognized and which are perpendicular to the work edge surfaces 113.

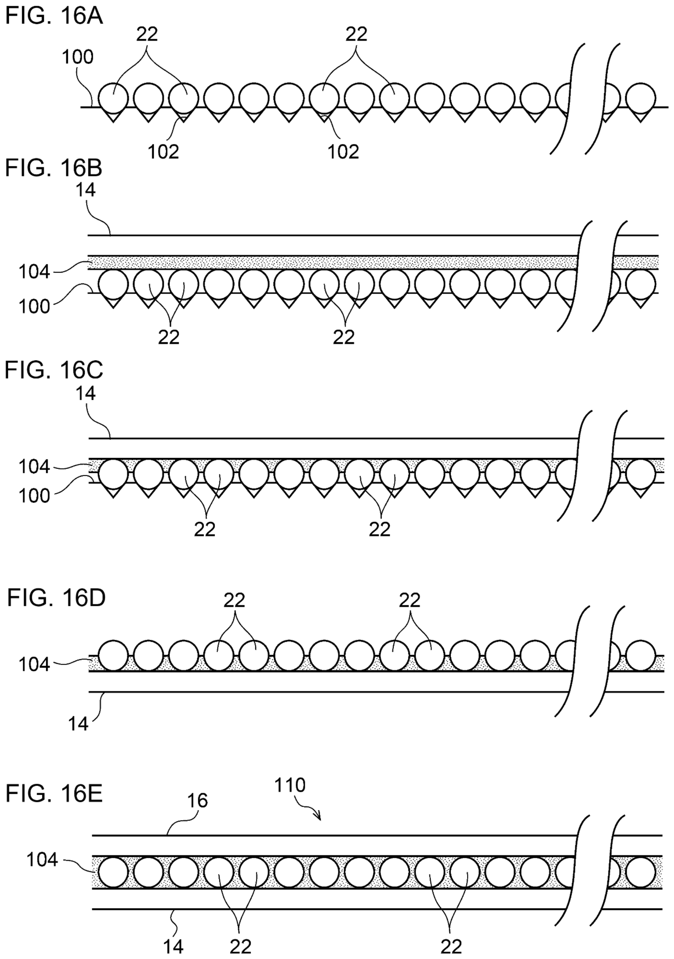

Figs. 16A to 16E are schematic views for explaining assembly of the plate-shaped work 110 of the rod lens array according to Example 1. Here, the "plate-shaped work" is a work in process including a pair of parallel flat plate-shaped substrates and a plurality of glass rods sandwiched between the plate-shaped substrates, and it should be noted that the "plate-shaped work" is different from a work included in an object to be used for acquisition of information regarding appearance using a CIS or an image inspection device. The plate-shaped work 110 including the glass rod No. 1' was manufactured as follows.

First, as illustrated in Fig. 16A, 1050 glass rods 22 were arranged so as to be supported by the V grooves 102 of the grooved surface plate 100.

Next, as illustrated in Fig. 16B, the first plate-shaped substrate was overlaid on the surface plate 100 such that a surface of a resin sheet 104 was in contact with the glass rods 22.

Next, as illustrated in Fig. 16C, a surface of the first plate-shaped substrate 14 opposite to the surface plate 100 was pressurized such that the resin of the resin sheet 104 infiltrated into a gap between the glass rods 22, and the first plate-shaped substrate 14 was pressed against the surface plate 100.

Next, as illustrated in Fig. 16D, after the gap between the glass rods 22 was sufficiently impregnated with an adhesive resin component of the resin sheet 104, and the glass rods 22 were stuck and fixed to the first plate-shaped substrate 14, the first plate-shaped substrate 14 was separated from the surface plate 100.

Next, as illustrated in Fig. 16E, the second plate-shaped substrate 16 was overlaid on the first plate-shaped substrate 14 such that the resin sheet 104 was in contact with the glass rods 22, and the plate-shaped substrates were pressurized so as to be parallel to each other, whereby the glass rods 22 were impregnated with an adhesive resin of the resin sheet 104 of the second plate-shaped substrate 16. The plurality of arranged glass rods 22 and the pair of plate-shaped substrates sandwiching the glass rods 22 therebetween were integrated to manufacture the plate-shaped work 110 of a rod lens array.

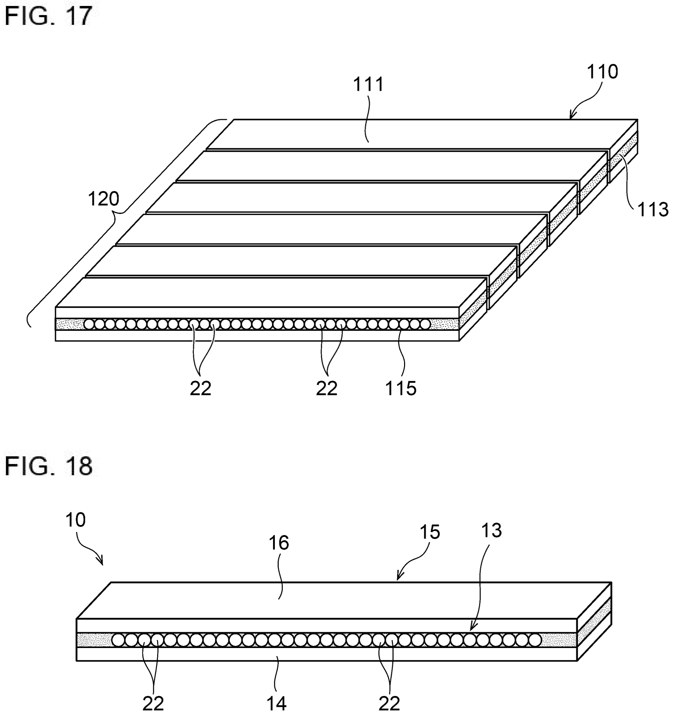

Fig. 17 is a schematic view illustrating a plurality of lens array works 120 cut out from one plate-shaped work 110. The plate-shaped work 110 including the glass rod 22 of No. 1' was cut at a predetermined width perpendicularly to the work edge surface 113 and the work main surface 111 and in parallel to the lens end surface-side edge surface 115 to manufacture a lens array work 120 according to Example 1. For cutting, a common diamond blade for cutting ceramics was used. Here, the predetermined width corresponds to a subsequent lens length Z. In the lens array work 120, a lens surface of a rod lens array, which is a finished product, is not polished.

The plate-shaped work 110 including the glass rod 22 of No. 1' was set such that two reference surfaces perpendicular to each other and provided in advance in a cutting machine were abutted and fixed to the work edge surface 113 and the work main surface 111, respectively, and the cutting blade was advanced all the time in a direction perpendicular to the work edge surface 113 and the work main surface 111 to cut the plate-shaped work 110. As illustrated in Fig. 17, a plurality of lens array works 120 can be cut out from one plate-shaped work 110 to be manufactured. A cut surface of the lens array work 120 corresponds to the first surface 13 and the second surface 15 of a subsequent rod lens array (see Fig. 1).

Next, the cut surface of the lens array work 120 was polished to create the first surface 13 and the second surface 15 corresponding to a light incident surface and a light emission surface, thereby manufacturing the rod lens array according to Example 1. Polishing was performed by a simultaneous polishing method of front and back surfaces using a colloidal polishing liquid containing cerium oxide as a main component by a planetary double-sided polishing machine. A parallelism between the first surface 13 and the second surface 15 was 0.001 mm. Fig. 18 is a schematic view of the rod lens array 10 according to Example 1 manufactured through the above process.

(Measurement of lens length Z)

When the lens length Z at a midpoint of the rod lens array 10 in the main scanning direction was measured with a micrometer, the lens length Z of the rod lens array 10 according to Example 1 was 9.27 mm.

(Measurement of array accuracy)

Dimensions relating to arrangement accuracy were measured using a CNC image measuring device Quick Vision (model: QVT1-X404L1L-C) manufactured by Mitutoyo Corporation.

Among the rod lenses 12 included in the rod lens array 10, a rod lens at one end in the main scanning direction was referred to as $LZ_1$, and a rod lens at the other end was referred to as $LZ_k$ (k = 1050). A line segment connecting a center of the rod lens $LZ_1$ and a center of the rod lens $LZ_k$ on the first surface 13 was defined as an x-axis on the first surface 13, and the center of the rod lens $LZ_1$ was defined as x = 0 on the first surface 13. On the first surface 13, $x_{(1)n}$, which is an x coordinate of a center of each rod lens $LZ_n$ (n = 1 to k (k = 1050)), was obtained.

Similarly, a line segment connecting a center of the rod lens $LZ_1$ and a center of the rod lens $LZ_k$ on the second surface 15 was defined as an x-axis on the second surface 15, and a center of the rod lens $LZ_1$ was defined as x = 0 on the second surface 15. On the second surface 15, $x_{(2)n}$, which is an x coordinate of a center of each rod lens $LZ_n$ (n = 1 to k (k = 1050)), was obtained.

An average distance $p_{(1)av}$ between center axes on the first surface 13 was obtained from the following formula (14), an average distance $p_{(2)av}$ between center axes on the second surface 15 was obtained from the following formula (15), and an average of $p_{(1)av}$ and $p_{(2)av}$ was defined as an average distance $p_{av}$ between center axes of the rod lens array 10 according to Example 1. The average distance $p_{av}$ between center axes of the rod lens array according to Example 1 was 0.305 mm.

[Mathematical formula 3]

$$p_{(1)av} = \left(\sum_{n=1}^{k} (x_{(1)n} - x_{(1)n-1})\right) / k \qquad (14)$$

$$p_{(2)av} = \left(\sum_{n=1}^{k} (x_{(2)n} - x_{(2)n-1})\right) / k \qquad (15)$$

Next, an absolute value of a difference between centers of each rod lens $LZ_n$ on the first surface 13 and the second surface 15 was determined by a formula: $\Delta x_n = |x_{(1)n} - x_{(2)n}|$, and $\Delta x_{max}$ as a maximum value of the absolute values was obtained. The maximum value $\Delta x_{max}$ of a difference between axial positions of the rod lens array 10 according to Example 1 on the first surface 13 and the second surface 15 was 0.030 mm.

Furthermore, the rod lens diameter $r_0$ (lens radius) of the rod lens array 10 was measured in a glass rod state as described above, but was measured again in a lens array state after a contour was detected with a similar image measuring device. For all the rod lenses $LZ_n$ (n = 1 to k), the lens diameters on the first surface 13 were measured, an average value thereof was obtained, the lens diameters on the second surface 15 were measured, an average value thereof was obtained, and an average value of the two average values was defined as the rod lens diameter $r_0$ of the rod lens array 10 according to Example 1. Using these parameters, an inter-lens distance St according to Example 1 was obtained from St = $p_{av} - 2 \times r_0$. The lens diameter $r_0$ of the rod lens array 10 according to Example 1 was 0.150 mm, and the inter-lens distance St was 0.005 mm.

(Measurement of imaging performance and image length)

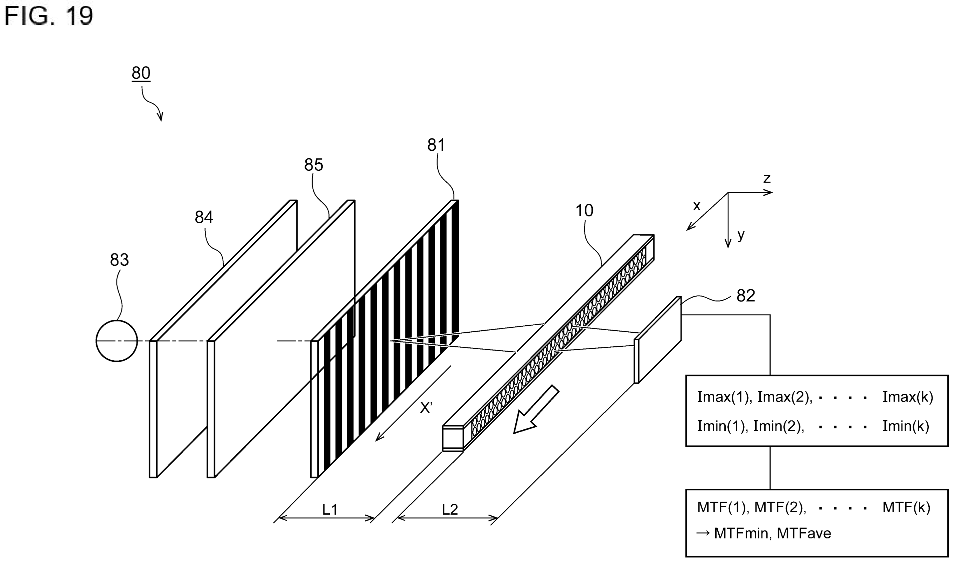

Fig. 19 illustrates an image formation evaluation optical system 80 of the rod lens array 10. The rod lens array 10 was arranged between a test target 81 and an image sensor 82 such that an image of the test target 81 was formed on a light receiving surface of the image sensor 82 by the rod lens array 10. At this time, a light incident surface and a light emission surface (the first surface and the second surface) of the rod lens array 10 were substantially parallel to the test target 81 and the light receiving surface of the image sensor.

In order to illuminate the test target 81, illumination light was emitted from behind the test target 81 (opposite side to the image sensor 82). A wavelength band pass filter (center wavelength =570 nm, full width at half maximum =15 nm) 84 and an opal diffusion plate 85 were arranged in order from a white light source 83 constituted by a halogen lamp as the illumination light, whereby an application wavelength was made uniform and an intensity distribution was made uniform.

Next, both $L_1$ and $L_2$ were changed symmetrically and adjusted while $L_1 = L_2$ was maintained all the time such that MTF in a predetermined portion (central portion) of the rod lens array 10 was the best (maximum value). At this time, a value of $L_2$ at which the MTF was the best (maximum value) was defined as WD, which is a working distance of the rod lens array 10 according to Example 1. Furthermore, TC, which is a total conjugate length of the rod lens array 10 according to Example 1, was obtained by a formula: $TC = Z + L_1 + L_2$. The working distance WD of the rod lens array 10 according to Example 1 was 6.9 mm, and the total conjugate length TC was 23.0 mm.

In an image light intensity distribution of the test target (6 line pairs/mm Ronchi-ruling pattern) 81 by the rod lens array 10, when a maximum value within a predetermined range was $I_{max}$ and a minimum value within the predetermined range was $I_{min}$, MTF was obtained by $MTF = (I_{max} - I_{min})/(I_{max} + I_{min}) \times 100$ [%]. The predetermined range was $5 \times M$ [mm] when a spatial frequency of the pattern of the test target 81 was $M$ [/mm]. Since the spatial frequency of the test target 81 used at this time was 6 lp/mm (6/mm), the range was 30 mm.

Next, DOF was evaluated in the image formation evaluation optical system 80 including the test target 81. A value of MTF was sequentially calculated while $L_1$ was changed in a + direction (direction in which $L_1$ increases) and a - direction (direction in which $L_1$ decreases) starting from a positional relationship between $L_1$ and $L_2$ in which the specified MTF was maximum. From a relationship between $L_1$ and the value of MTF, a range of $L_1$ in which MTF exceeded 30% was specified and defined as DOF.

Furthermore, arrangement of L1 and L2 specified such that the MTF was the best (maximum value) was fixed, and a test target of a knife edge chart was placed at the place where the test target 81 was present in place of the test target 81.

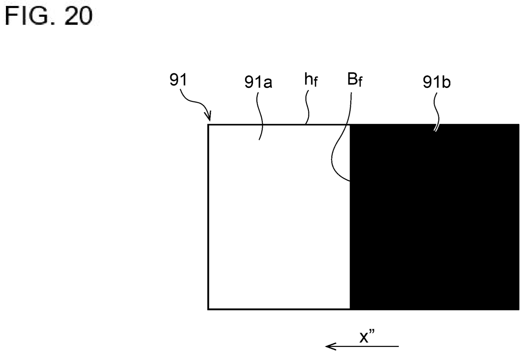

Fig. 20 is a plan view of the knife edge chart. As illustrated in Fig. 20, the knife edge chart is a pattern including at least one set of a light transmission portion 91a, a light shielding portion 91b, and a boundary line $B_f$ between the light transmission portion 91a and the light shielding portion 91b, and may be a pattern obtained by dividing one main surface of a parallel flat plate-shaped glass into two sections of the light transmission portion 91a and the light shielding portion 91b. A test target 91 formed of the knife edge chart used here is one in which a vapor deposition film made of metal chromium is provided as the light shielding portion 91b on one side of one main surface of a rectangular parallel flat plate-shaped glass having at least one side $h_f$ in plan view so as to be perpendicular to the side $h_f$ and to bisect the side $h_f$, and a transparent glass is provided as the light transmission portion 91a on the other side. The test target 91 of the knife edge chart has only one black-and-white switching pattern only in a direction of the side $h_f$.

While the rod lens array 10 was moved in the x direction from the first rod lens $LZ_1$ of the rod lens array 10 to the k-th rod lens $LZ_k$ (k = 1050), an image of a boundary portion of the knife edge chart was captured by the image sensor 82, and an x direction displacement amount at an image forming position of the boundary portion was evaluated. At this time, the position of the boundary projected by the first rod lens $LZ_1$ in the x direction was defined as zero. An absolute value of a maximum value of the x direction displacement amount of the imaged boundary portion was obtained as $\Delta W_{max}$. When the object-lens array-image system is exactly an erect equal-magnification system, a value of $\Delta W_{max}$ is zero. However, when the value of $\Delta W_{max}$ is some real number other than zero, the system deviates from the erect equal-magnification system. The larger the value, the larger the deviation from the erect equal-magnification system. $\Delta W_{max}$ is a change amount from an equal magnification image. The change amount $\Delta W_{max}$ of the rod lens array 10 according to Example 1 from an equal magnification image was 0.07 mm.

(Example 2)

A rod lens array according to Example 2 was manufactured by a similar method and under similar conditions to those in Example 1 except for the lens length Z. In the rod lens array according to Example 2, the lens length Z was 9.80 mm. As in the case of Example 1, characteristic values of the rod lens array according to Example 2 were measured and calculated. Table 3 presents the characteristic values of the rod lens array according to Example 2.

(Example 3)

A rod lens array according to Example 3 was manufactured by a similar method and under similar conditions to those in Example 1 except for the lens length Z. In the rod lens array according to Example 3, the lens length Z was 8.86 mm. As in the case of Example 1, characteristic values of the rod lens array according to Example 3 were measured and calculated. Table 3 presents the characteristic values of the rod lens array according to Example 3.

(Example 4)

A rod lens array according to Example 4 was manufactured by a so-called resin filling method.

The No. 2' glass rod with refractive index distribution was cut to an appropriate length to prepare a glass rod having a length suitable for assembly.

A pair of a first plate-shaped substrates and a second plate-shaped substrate was prepared. Each of the plate-shaped substrates was made of FRP containing an epoxy resin. As the black resin sheet, a sheet containing, as a main component, an epoxy resin containing carbon black as a pigment was used, and the black resin sheet was provided on the entire surface of one main surface of each of the plate-shaped substrates in advance. The plate-shaped substrates are parallel flat plates each having a planar dimension capable of covering side plates of the plurality of rod lens arrays when cut into a strip shape and having a thickness of 1.4 mm. Note that the plate-shaped substrate used for the rod lens array according to Example 4 does not include a resin sheet.

Furthermore, a pair of strip-shaped spacers having a thickness corresponding to the diameter of the glass rod was prepared. The spacers are also made of FRP containing an epoxy resin. The spacers each have a parallel flat plate shape with a thickness of 1 mm.

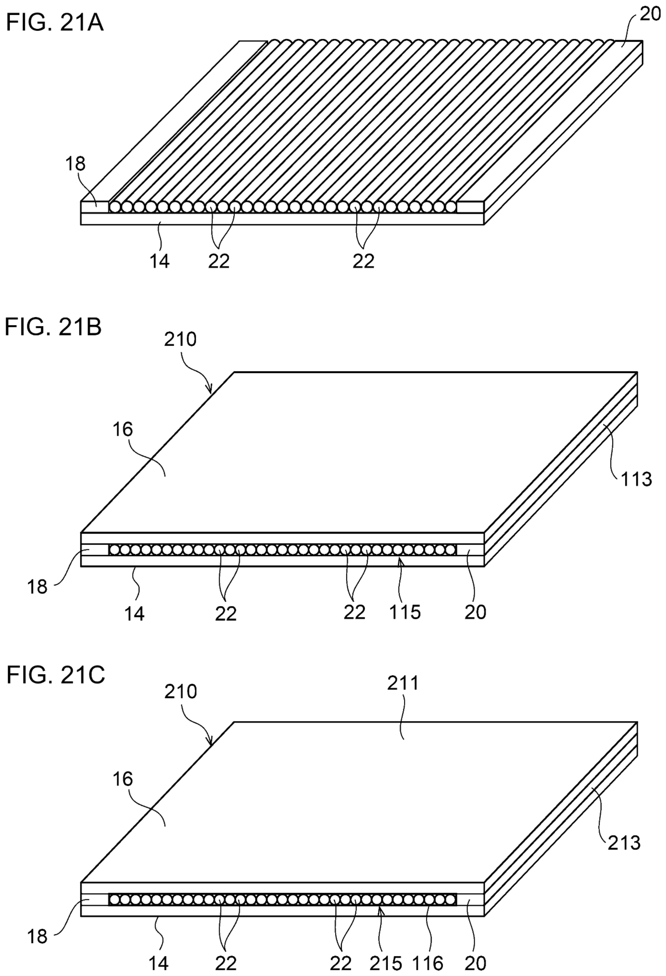

Figs. 21A to 21C are schematic views for explaining assembly of a plate-shaped work of the rod lens array according to Example 4. The plate-shaped work including the glass rod No. 2' was manufactured as follows.

On one main surface of the first plate-shaped substrate 14, the spacer 18 was arranged at one end portion, and the first plate-shaped substrate 14 and the spacer 18 were bonded to each other such that edge surfaces of the first plate-shaped substrate 14 and the spacer 18 were flat. A cyanoacrylate-based adhesive was used for bonding.

Next, the glass rods 22 of No. 2' were directly arranged on the first plate-shaped substrate 14 with which the spacer 18 was integrated at one end. The glass rods 22 were densely arranged in parallel in such a manner that their peripheral surfaces were almost in contact with each other. The number of the arranged glass rods 22 was 297.

After the glass rods 22 were arranged in parallel, the spacer 20 was arranged in contact with the glass rods 22 and bonded to the first plate-shaped substrate 14. At this time, an edge surface of spacer 20 and an edge surface of the plate-shaped substrate 14 were made substantially flat.

Fig. 21A illustrates a schematic view of the first plate-shaped substrate 14 and the glass rods 22 arranged in parallel on the first plate-shaped substrate 14. Note that, in manufacture of the rod lens array according to Example 4, a grooved surface plate was not used. Since the diameter of the glass rod 22 of No. 2' is 1.075 mm and is relatively large (thick), even if the glass rods 22 are arranged directly on the first plate-shaped substrate 14 in parallel, the glass rods 22 are less likely to be significantly inclined. Therefore, this method was used for manufacturing the rod lens array of Example 4.

Fig. 21B illustrates a schematic view of the glass rods 22 sandwiched between the pair of spacers 18 and 20 and the pair of plate-shaped substrates 14 and 16. The second plate-shaped substrate 16 was overlaid on the glass rods 22 arranged in parallel, and surfaces of the spacers 18 and 20 facing the second plate-shaped substrate 16 and a surface of the second plate-shaped substrate 16 were bonded to and integrated with each other to manufacture a plate-shaped work 210 including the glass rods 22 sandwiched between the pair of spacers 18 and 20 and the pair of plate-shaped substrates 14 and 16. At this time, edge surfaces of the spacers 18 and 20 and edge surfaces of the plate-shaped substrates 14 and 16 were made substantially flat (work edge surface). Note that, at this time point, the inside of the plate-shaped work 210 was not filled with a resin.

Next, a black resin was filled from one lens end surface-side edge surface 115. Fig. 21C illustrates a schematic view of the plate-shaped work 210 filled with the black resin 116. A nozzle having a structure and a size capable of covering the entire edge surface was attached to a lens end surface-side edge surface opposite to a predetermined resin inlet, and the nozzle was connected to a vacuum pump to decompress the inside of the plate-shaped work 210. This facilitates filling of the black resin 116 into the plate-shaped work 210 and improves efficiency. In this way, the plate-shaped work 210 related to the rod lens array according to Example 4 was manufactured.

The plate-shaped work 210 related to the rod lens array according to Example 4 includes a pair of work main surfaces 211 including main surfaces of the first plate-shaped substrate 14 and the second plate-shaped substrate 16, a pair of work edge surfaces 213 including edge surfaces of the plate-shaped substrates 14 and 16 and the spacers 18 and 20, and a pair of lens end surface-side edge surfaces 215 in which end surfaces of the plurality of arranged glass rods 22 can be visually recognized and which are perpendicular to the work edge surfaces 213.

(Manufacture of lens array work and rod lens array)

The plate-shaped work 210 including the glass rod of No. 2' was cut at a predetermined width perpendicularly to the work edge surface 213 and the work main surface 211 and in parallel to the lens end surface-side edge surface 215 to manufacture a lens array work according to Example 4. For cutting, a common diamond blade for cutting ceramics was used. Here, the predetermined width corresponds to a subsequent lens length Z.

The plate-shaped work 210 including the glass rod of No. 2' was set such that two reference surfaces perpendicular to each other and provided in advance in a cutting machine were abutted and fixed to the work edge surface 213 and the work main surface 211, respectively, and the cutting blade was advanced all the time in a direction perpendicular to the work edge surface 213 and the work main surface 211 to cut the plate-shaped work 210. A plurality of lens array works can be cut out from one plate-shaped work 210 to be manufactured. A cut surface of the lens array work corresponds to the first surface 13 and the second surface 15 of a subsequent rod lens array.

Next, the cut surface of the lens array work was polished to create the first surface 13 and the second surface 15 corresponding to a light incident surface and a light emission surface, thereby manufacturing the rod lens array according to Example 4. Polishing was performed by a simultaneous polishing method of front and back surfaces using a colloidal polishing liquid containing cerium oxide as a main component by a planetary double-sided polishing machine. A parallelism between the first surface 13 and the second surface 15 was 0.001 mm.

Characteristic values of the rod lens array according to Example 4 were measured and calculated under similar conditions and by a similar method to those in Example 1. Table 3 presents the characteristic values of the rod lens array according to Example 4.

(Example 5)

A rod lens array according to Example 5 was manufactured by a similar method and under similar conditions to those in Example 4 except that the glass rod of No. 3' was used, and the number of arranged lenses and the lens length Z were changed. In the rod lens array according to Example 5, the number of arranged lenses was 297, and the lens length Z was 36.03 mm. As in the case of Example 1, characteristic values of the rod lens array according to Example 5 were measured and calculated. Table 3 presents the characteristic values of the rod lens array according to Example 5.

(Example 6)

A rod lens array according to Example 6 was manufactured by a similar method and under similar conditions to those in Example 1 except that the glass rod of No. 6' was used and the lens length Z was changed. In the rod lens array according to Example 6, the lens length Z was 7.77 mm. As in the case of Example 1, characteristic values of the rod lens array according to Example 6 were measured and calculated. Table 3 presents the characteristic values of the rod lens array according to Example 6.

(Comparative Example 1)

The No. 4' glass rod with refractive index distribution was cut to an appropriate length to prepare a glass rod having a length suitable for assembly.

A pair of a first plate-shaped substrate and a second plate-shaped substrate each having a black resin adhesive sheet on one main surface thereof was prepared. Each of the plate-shaped substrates was made of FRP containing an epoxy resin. As the black resin sheet, a sheet containing, as a main component, an epoxy resin containing carbon black as a pigment was used, and the black resin sheet was provided on the entire surface of one main surface of each of the plate-shaped substrates in advance. The plate-shaped substrates are parallel flat plates each having a planar dimension capable of covering side plates of the plurality of rod lens arrays when cut into a strip shape and having a thickness of 0.5 mm. The black resin sheet contains, as a main component, an epoxy resin containing carbon black as a pigment.

A rod lens array according to Comparative Example 1 was manufactured by a similar method and under similar conditions to those in Example 1 except that a grooved surface plate having a groove arrangement pitch of 0.30 mm was used, the number of lenses (glass rods) arranged was 985, and the lens length Z was 9.91 mm. As in the case of Example 1, characteristic values of the rod lens array according to Comparative Example 1 were measured and calculated. Table 3 presents the characteristic values of the rod lens array according to Comparative Example 1.

(Comparative Example 2)

A rod lens array according to Comparative Example 2 was manufactured by a similar method and under similar conditions to those in Comparative Example 1 except that the lens length Z was 10.54 mm. As in the case of Example 1, characteristic values of the rod lens array according to Comparative Example 2 were measured and calculated. Table 3 presents the characteristic values of the rod lens array according to Comparative Example 2.

(Comparative Example 3)

A rod lens array according to Comparative Example 3 was manufactured by a similar method and under similar conditions to those in Example 4 except that the glass rod of No. 5' was used, the number of lenses (glass rods) arranged was 305, and the lens length Z was 19.35 mm. As in the case of Example 1, characteristic values of the rod lens array according to Comparative Example 3 were measured and calculated. Table 3 presents the characteristic values of the rod lens array according to Comparative Example 3.

The characteristic values and the like of the rod lens arrays according to Examples 1 to 6 and Comparative Examples 1 to 3 presented in Table 3 are compared and examined. Example 1 and Comparative Example 1 were manufactured by adjusting the lens lengths Z thereof such that the aperture angle and the refractive index distribution constant of Example 1 were close to those of Comparative Example 1, and the total conjugate lengths TC thereof were the same value.

When Example 1 and Comparative Example 1 are compared, the change amount $\Delta W_{max}$ from the equal magnification image in Example 1 is 0.07 mm, which is less than 0.1 mm, whereas in Comparative Example 1, $\Delta W_{max}$ is a large value of 0.22 mm, and there is a difference in the change amount from the equal magnification image in the x direction between an object and an image thereof. Here, focusing on the inter-lens distances St of Example 1 and Comparative Example 1, St is 0.005 mm in Example 1, whereas St is 0.025 mm in Comparative Example 1, which suggests that the degree of freedom in arrangement of the rod lenses is increased by an increase in a distance between lenses. The maximum value $\Delta x_{max}$ of an absolute value of a difference between the positions of the centers on the first surface and the second surface of the rod lens array is also large according to the magnitude of $\Delta W_{max}$, which supports that an inclination of the input/output opening of the rod lens occurs and the image position of the rod lens array is displaced.

Next, Examples 2 and 6 and Comparative Example 2 in which the total conjugate length TC is shorter than that in Example 1, and Example 3 and Comparative Example 3 in which the total conjugate length TC is longer than that in Example 1 are compared and examined. In each of the cases where TC is shorter and longer, $\Delta W_{max}$ is smaller than 0.1 mm in Examples 2, 3, and 6 where the inter-lens distance St is narrow, and $\Delta W_{max}$ exceeds 0.1 mm in Comparative Examples 2 and 3 where the inter-lens distance St is wide, which suggests that it is effective to narrow the rod lens gap for reducing $\Delta W_{max}$. On the other hand, since $\Delta W_{max}$ is proportional to the total conjugate length TC in a form according to the formula (8), a short design of TC can contribute to reduction of $\Delta W_{max}$.

Subsequently, Comparative Example 1 and Examples 4 and 5 are compared and examined. Examples 4 and 5 are lenses having longer TCs than Comparative Example 1, but have $\Delta W_{max}$ smaller than 0.1 mm. On the other hand, in Examples 4 and 5, since the inter-lens distance St is small and the lens outer diameter is about three times that of Comparative Example 1, the number of lenses arranged in a unit length is small. When the number of lenses arranged in the x direction decreases, the lens is less likely to be displaced, and therefore the value of $\Delta x_{max}$ decreases. In addition, if the inter-lens distance is reduced as described in the above examination between Examples and Comparative Examples, $\Delta W_{max}$ decreases even in a rod lens array having a long TC, and it is also possible to suppress a change in size between an image and an object to be small.

If the rod lens array manufactured as in the present Examples is used, a change in size between an image and an object or a change in position between the image and the object caused in a CIS scanner using a conventional rod lens array is eliminated, and an image having the same size as the object is projected on a sensor. Therefore, the position and dimensions of a subject can be easily obtained, and utilization of a CIS scanner for positioning and surveying by an image, such as accurate feedback control of a reference position of a printing plate and area evaluation of defects, can be achieved.

Hitherto, the present invention has been described on the basis of the embodiment. This embodiment is intended to be illustrative only, and it will be obvious to those skilled in the art that various modifications to components and processes can be made and that such modifications are also within the scope of the present invention.

[INDUSTRIAL APPLICABILITY]

The present invention can be used for a contact image sensor.

[REFERENCE SIGNS LIST]

10 Rod lens array, 12 Rod lens, 13 First surface, 14, 16 Plate-shaped substrate, 15 Second surface, 18, 20 Plate-shaped spacer, 21 Core portion, 22 Glass rod, 23 Cladding portion, 26 Nozzle, 30 Double spinning apparatus, 32 Core portion glass raw material, 34 Cladding portion glass raw material, 36, 38 Crucible, 50 Image sensor, 60 Optical printer, 70 Inspection device, 80 Image formation evaluation optical system

**Claims**

1.  A rod lens array in which a plurality of gradient index rod lenses are arranged in a main scanning direction such that optical axes thereof are substantially parallel, wherein

    when a substantially erect equal-magnification image of an object is formed on an image surface,

    $$0.01 \ [mm] \ \le \ \Delta W \ \le \ 0.1 \ [mm]$$

    is satisfied (in which $\Delta W$ is an absolute value of a difference between a length of the object in the main scanning direction and a length of the image in the main scanning direction).

2.  The rod lens array according to claim 1, wherein

    the $\Delta W$ is represented by

    $$\Delta W \ = \ TC \cdot \Delta X / Z$$

    (in which TC is a distance between the object and the image, Z is a distance between a first surface on an object side of the rod lens array and a second surface on an image side, and $\Delta X$ is an absolute value of a difference between a distance between optical axes of rod lenses at both ends on the first surface and a distance between optical axes of rod lenses at both ends on the second surface).

3.  The rod lens array according to claim 2, wherein
    the $\Delta X$ satisfies

    $$0.005 \ [mm] \ \le \ \Delta X \ \le \ 0.030 \ [mm].$$

4.  The rod lens array according to any one of claims 1 to 3, wherein

    an inter-lens distance St satisfies

    $$S_t \ \le \ 0.01 \ [mm]$$

    (in which St is a distance between adjacent rod lenses, and is obtained by $St = p_d - 2 \times r_0$ when a rod lens radius is $r_0$ and a distance between central axes is $p_d$).

5.  The rod lens array according to any one of claims 1 to 4, wherein

    the rod lens has a cylindrical shape having a refractive index distribution changing in a radial direction from a center,
    the refractive index distribution n(r) is approximately represented by

    $$n(r)^2 \ = \ n_0^2 \cdot \{1 - (g \cdot r)^2\},$$

    and
    an aperture angle $\theta_c$ of the rod lens is represented by

    $$\theta_c \ = \ n_0 \cdot g \cdot r_e,$$

    and

    satisfies $3.5° \le \theta_c \le 5.5°$

(in which r is a distance from a central axis of the rod lens, $n_0$ is a refractive index on the central axis, $n(r)$ is a refractive index at r, g is a refractive index distribution constant, and $r_e$ is an effective radius of the rod lens).

6. The rod lens array according to claim 5, wherein
the refractive index distribution constant of the rod lens satisfies

$$0.08 \leq g \leq 0.45.$$

7. The rod lens array according to any one of claims 1 to 6, wherein

the rod lens has a core/cladding structure, and satisfies

$$0.70 \leq r_e/r_0 \leq 0.95 \text{ and } 0.02 \leq C_t \text{ [mm]}$$

when a radius of the rod lens is $r_0$, a cladding thickness is Ct, and an effective radius of the rod lens is $r_e$.

8. The rod lens array according to any one of claims 1 to 7, which is used for reading an image of an object in an image inspection device.

9. A contact image sensor comprising the rod lens array according to any one of claims 1 to 7.

10. A reading device comprising the contact image sensor according to claim 9.

11. An image inspection device comprising the rod lens array according to any one of claims 1 to 7.

12. The image inspection device according to claim 11, having measurement accuracy of 0.1 mm or less.

13. A method for manufacturing the rod lens array according to any one of claims 1 to 8, the method comprising:

preparing a grooved surface plate in which a plurality of grooves are arranged;
arranging cylindrical glass rods having a refractive index distribution in a radial direction in the grooves;
superposing a first plate-shaped substrate having a resin surface on one main surface on the grooved surface plate such that the resin surface is in contact with side surfaces of the glass rods and pressurizing the first plate-shaped substrate;
separating the first plate-shaped substrate having the glass rods fixed to the resin surface from the grooved surface plate; and
superposing a second plate-shaped substrate having a resin surface on one main surface on the first plate-shaped substrate such that the resin surface is in contact with side surfaces of the glass rods and pressurizing the second plate-shaped substrate.

FIG. 1

FIG. 2

## FIG. 3

## FIG. 4A

## FIG. 4B

FIG. 5A

FIG. 5B

FIG. 6

FIG. 7A

FIG. 7B

FIG. 8

FIG. 9

FIG. 10

FIG. 11

FIG. 12

FIG. 13

EP 4 692 864 A1

FIG. 14

FIG. 15

## FIG. 16A

## FIG. 16B

## FIG. 16C

## FIG. 16D

## FIG. 16E

FIG. 17

FIG. 18

FIG. 19

Imax(1), Imax(2), · · · · Imax(k)
Imin(1), Imin(2), · · · · Imin(k)

MTF(1), MTF(2), · · · · MTF(k)
→ MTFmin, MTFave

EP 4 692 864 A1

FIG. 20

FIG. 21A

20

18

14   22        22

FIG. 21B

210

16

113

18

14   22        22   115   20

FIG. 21C

210        211

16

213

18

14   22        22   215   116   20

## INTERNATIONAL SEARCH REPORT

| International application No. |
| --- |
| **PCT/JP2024/013453** |

**A. CLASSIFICATION OF SUBJECT MATTER**

***G02B 3/00*** (2006.01)i
FI: G02B3/00 B; G02B3/00 A

According to International Patent Classification (IPC) or to both national classification and IPC

**B. FIELDS SEARCHED**

Minimum documentation searched (classification system followed by classification symbols)

G02B3/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2020/158043 A1 (NIPPON SHEET GLASS COMPANY, LIMITED) 06 August 2020 (2020-08-06) paragraphs [0026], [0034], [0060]-[0061], [0079], table 3 | 1-3, 6-12 |
| Y | paragraphs [0026], [0034], [0060]-[0061], [0079], table 3 | 4-5, 13 |
| Y | JP 2002-107554 A (NIPPON SHEET GLASS COMPANY, LIMITED) 10 April 2002 (2002-04-10) paragraphs [0006], [0008], [0014] | 4 |
| Y | JP 11-064605 A (NIPPON SHEET GLASS COMPANY, LIMITED) 05 March 1999 (1999-03-05) paragraphs [0009], [0012] | 5 |
| Y | JP 2014-139669 A (MITSUBISHI RAYON CO., LTD.) 31 July 2014 (2014-07-31) paragraphs [0011], [0012] | 5 |
| Y | JP 2011-186490 A (MITSUBISHI RAYON CO., LTD.) 22 September 2011 (2011-09-22) paragraphs [0003]-[0004] | 13 |

☑ Further documents are listed in the continuation of Box C.    ☑ See patent family annex.

| | |
| --- | --- |
| * Special categories of cited documents: "A" document defining the general state of the art which is not considered to be of particular relevance "D" document cited by the applicant in the international application "E" earlier application or patent but published on or after the international filing date "L" document which may throw doubts on priority claim(s) or which is cited to establish the publication date of another citation or other special reason (as specified) "O" document referring to an oral disclosure, use, exhibition or other means "P" document published prior to the international filing date but later than the priority date claimed | "T" later document published after the international filing date or priority date and not in conflict with the application but cited to understand the principle or theory underlying the invention "X" document of particular relevance; the claimed invention cannot be considered novel or cannot be considered to involve an inventive step when the document is taken alone "Y" document of particular relevance; the claimed invention cannot be considered to involve an inventive step when the document is combined with one or more other such documents, such combination being obvious to a person skilled in the art "&" document member of the same patent family |

| Date of the actual completion of the international search | Date of mailing of the international search report |
| --- | --- |
| **08 May 2024** | **21 May 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

International application No.

**PCT/JP2024/013453**

**C.    DOCUMENTS CONSIDERED TO BE RELEVANT**

| Category* | Citation of document, with indication, where appropriate, of the relevant passages | Relevant to claim No. |
|---|---|---|
| A | WO 2021/261319 A1 (NIPPON SHEET GLASS COMPANY, LIMITED) 30 December 2021 (2021-12-30)<br>entire text, all drawings | 1-13 |

Form PCT/ISA/210 (second sheet) (July 2022)

# EP 4 692 864 A1

## INTERNATIONAL SEARCH REPORT
### Information on patent family members

International application No.

**PCT/JP2024/013453**

| Patent document cited in search report | | | Publication date (day/month/year) | Patent family member(s) | | | Publication date (day/month/year) |
|---|---|---|---|---|---|---|---|
| WO | 2020/158043 | A1 | 06 August 2020 | TW | 202028135 | A | |
| JP | 2002-107554 | A | 10 April 2002 | US | 2002/0063968 | A1 | |
| | | | | paragraphs [0015], [0022], [0080] | | | |
| | | | | EP | 1193510 | A2 | |
| | | | | TW | 499571 | B | |
| | | | | CN | 1346995 | A | |
| JP | 11-064605 | A | 05 March 1999 | US | 5978146 | A | |
| | | | | column 2, lines 45-54, column 4, lines 13-15 | | | |
| | | | | EP | 898181 | A2 | |
| | | | | TW | 396278 | B | |
| JP | 2014-139669 | A | 31 July 2014 | US | 2014/0177061 | A1 | |
| | | | | paragraphs [0010], [0012] | | | |
| | | | | CN | 103885104 | A | |
| JP | 2011-186490 | A | 22 September 2011 | CN | 1657977 | A | |
| WO | 2021/261319 | A1 | 30 December 2021 | US | 2023/0258846 | A1 | |
| | | | | entire text, all drawings | | | |
| | | | | EP | 4174533 | A1 | |
| | | | | CN | 115836234 | A | |
| | | | | TW | 202206934 | A | |

Form PCT/ISA/210 (patent family annex) (July 2022)

## REFERENCES CITED IN THE DESCRIPTION

**Patent documents cited in the description**

- JP 2002318302 A
- JP 63301901 A
- JP 2004151682 A
- JP 2006056768 A
- JP 2006106324 A
- JP 2020121922 A
- JP 50044844 A